# EUROPEAN PATENT SPECIFICATION

(11) **EP 3 888 965 B1**
(45) Date of publication and mention of the grant of the patent: **13.09.2023**
(21) Application number: 19889683.9
(22) Date of filing: 30.10.2019
(51) Int. Cl.: B60K 35/00, G01C 21/36, B60J 1/02, G02B 27/01, G09G 5/00, G09G 5/36

(54) **HEAD-UP DISPLAY, VEHICLE DISPLAY SYSTEM, AND VEHICLE DISPLAY METHOD**
HEAD-UP DISPLAY, FAHRZEUGANZEIGESYSTEM UND FAHRZEUGANZEIGEVERFAHREN
AFFICHAGE TÊTE HAUTE, SYSTÈME D'AFFICHAGE DE VÉHICULE ET PROCÉDÉ D'AFFICHAGE DE VÉHICULE

(30) Priority: 30.11.2018 JP 2018225173; 30.11.2018 JP 2018225174; 30.11.2018 JP 2018225175; 30.11.2018 JP 2018225176; 30.11.2018 JP 2018225177; 30.11.2018 JP 2018225178
(43) Date of publication of application: 06.10.2021
(73) Proprietor: KOITO MANUFACTURING CO., LTD., Minato-ku Tokyo 108-8711 (JP)
(72) Inventor: MURATA, Kouhei, Shizuoka-shi, Shizuoka 424-8764 (JP); TOYOSHIMA, Takanobu, Shizuoka-shi, Shizuoka 424-8764 (JP); SATO, Noriko, Shizuoka-shi, Shizuoka 424-8764 (JP)
(74) Representative: Hoffmann Eitle
(86) International application number: PCT/JP2019/042583
(87) International publication number: WO 2020/110580

(56) References cited:
- CN-A- 108 896 067
- JP-A- 2005 331 624
- JP-A- 2008 014 754
- JP-A- 2011 121 401
- JP-A- 2011 123 119
- JP-A- 2015 003 707
- JP-A- 2015 128 956
- JP-A- 2015 152 467
- JP-A- 2016 024 202
- JP-A- 2017 193 246
- JP-A- 2018 039 332
- JP-A- 2018 097 252
- US-B2- 8 970 453

## Description

### TECHNICAL FIELD

The present invention relates to a head-up display, a vehicle display system, and a vehicle display method.

### BACKGROUND ART

Currently, research on an autonomous driving technology of an automobile has been actively conducted in various countries, and legislation for enabling a vehicle (hereinafter, the "vehicle" refers to an automobile) to travel on a public road in an autonomous driving mode has been studied in various countries. Here, in the autonomous driving mode, a vehicle system autonomously controls traveling of the vehicle. Specifically, in the autonomous driving mode, the vehicle system autonomously performs at least one of steering control (control of an advancing direction of the vehicle), brake control, and accelerator control (control of vehicle braking, and acceleration or deceleration) based on information indicating a surrounding environment of the vehicle (surrounding environment information) acquired from a sensor such as a camera or a radar (for example, a laser radar or a millimeter-wave radar). On the other hand, in a manual driving mode described below, a driver controls traveling of the vehicle, as is the case with many conventional vehicles. Specifically, in the manual driving mode, the traveling of the vehicle is controlled according to an operation of the driver (a steering operation, a brake operation, and an accelerator operation), and the vehicle system does not autonomously perform the steering control, the brake control, and the accelerator control. A driving mode of a vehicle is not a concept that exists only in some vehicles, but a concept that exists in all vehicles including the conventional vehicle that does not have an autonomous driving function, and the driving mode of the vehicle is classified according to, for example, a vehicle control method.

In this way, in the future, it is expected that a vehicle that travels in the autonomous driving mode (hereinafter, appropriately referred to as "autonomous driving vehicle") and a vehicle that travels in the manual driving mode (hereinafter, appropriately referred to as "manual driving vehicle") coexist on the public road.

In a future autonomous driving society, it is expected that visual communication between a vehicle and a person becomes more and more important. For example, it is expected that visual communication between the vehicle and an occupant of the vehicle becomes more and more important. In this regard, the visual communication between the vehicle and the occupant can be implemented using a head-up display (HUD). The head-up display can implement so-called augmented reality (AR) by projecting an image or a video on a windshield or a combiner, superimposing the image on a real space through the windshield or the combiner, and causing the occupant to visually recognize the image.

As an example of the head-up display, JP 2018-45103 A discloses a display apparatus including an optical system for displaying a stereoscopic virtual image by using a transparent display medium. The display apparatus projects light into a field of view of a driver on a windshield or a combiner. A part of the projected light passes through the windshield or the combiner, and the other part is reflected by the windshield or the combiner. The reflected light is directed to eyes of the driver. The driver perceives the reflected light that enters his eyes as a virtual image that appears to be an image of an object on an opposite side (outside the automobile) of the windshield or combiner against a background of a real object that can be seen through the windshield or combiner.

When external light such as sunlight enters an inside of the head-up display, the external light is focused by a display device and causes a local temperature rise, which may lead to disturbance of image display or heat damage to the display device. In order to prevent such a problem, a configuration in which heat dissipation of a display device is improved and a configuration in which a plate that reflects infrared rays is provided between the display device and a reflection portion are known (see JP 2005-313733 A). However, in JP 2005-313733 A, a component for preventing the temperature rise of the display device is separately required, which leads to an increase in cost.

US 8 970 453 B2 is related to the preamble of claim 1, and CN 108 896 067 A as well as JP 2008 014754 A show similar displays.

### SUMMARY OF INVENTION

### TECHNICAL PROBLEM

An object of the present disclosure is to provide a head-up display that can reduce discomfort given to an occupant while preventing a processing load applied to image generation.

An object of the present disclosure is to provide a head-up display and a vehicle display system with improved usability.

An object of the present disclosure is to provide a head-up display, a vehicle display system, and a vehicle display method that allow an occupant of a vehicle to easily recognize a light pattern displayed by a road surface drawing apparatus and an image displayed by a head-up display.

An object of the present disclosure is to provide a head-up display that can prevent occurrence of heat damage due to external light without causing quality of image generation to be displayed to an occupant to deteriorate.

### SOLUTION TO PROBLEM

In order to achieve the above-described objects, a head-up display according to an aspect of the present invention is a head-up display provided in a vehicle and configured to display a predetermined image toward an occupant of the vehicle, the head-up display including:
an image generation unit configured to emit light for generating the predetermined image and to irradiate a windshield or a combiner; and
a controller configured to control an operation of the image generation unit,
in which the controller controls the image generation unit to select one of a planar image and a stereoscopic image as a display mode of a virtual image object formed by the predetermined image and visually recognized by the occupant through the windshield or the combiner, according to a predetermined condition.

When the display mode of the virtual image object is projected as the planar image in association with a target object that exists around the vehicle, a two-dimensional object is displayed for the target object that is a three-dimensional object, which may give discomfort to the occupant. On the other hand, when all virtual image objects projected in a field-of-view region of the occupant are assumed to be image-generated as three-dimensional objects, a processing load for the image generation is increased. In such a state, according to the above configuration, the display mode of the virtual image object can be switched between the planar image and the stereoscopic image according to the predetermined condition. Accordingly, it is possible to reduce the discomfort given to the occupant while suppressing the processing load at the time of generating the image of the virtual image object.

Further, in the head-up display according to the present invention, the predetermined condition includes a distance from the occupant to the virtual image object, and may further include at least one of an attribute of a target object in the real space, an area where the virtual image object is disposed in a field-of-view region of the occupant, and a traveling scene of the vehicle.

According to the above configuration, it is possible to appropriately determine the display mode of the virtual image object according to a situation such as a projection distance of the virtual image object or the attribute of the target object.

Further, in the head-up display according to the present disclosure, in a case where the predetermined condition is the distance from the occupant to the virtual image object, the controller may control the image generation unit such that the display mode is set as the stereoscopic image when the distance is equal to or smaller than a threshold, and the display mode is set as the planar image when the distance is larger than the threshold.

According to the above configuration, the virtual image object displayed as the stereoscopic image and the virtual image object displayed as the planar image can be appropriately switched according to the projection distance of the virtual image object.

Further, in the head-up display according to the present disclosure, when the predetermined condition is the attribute of the target object, the controller may control the image generation unit such that the display mode of the virtual image object is set as the stereoscopic image for the target object having high importance, and the display mode of the virtual image object is set as the planar image for the target object having low importance.

According to the above configuration, when the importance of the target object is high, for example, when the target object is highly urgent for the occupant, the display mode of the virtual image object is set as the stereoscopic image, so that the occupant easily visually recognizes the target object. Further, when the importance of the target object is low, the display mode of the virtual image object is set as the planar image, so that the processing load applied to the image generation can be reduced.

Further, in the head-up display according to the present disclosure, in a case where the predetermined condition is the area where the virtual image object is disposed in the field-of-view region of the occupant, the controller may control the image generation unit such that the display mode is set as the stereoscopic image when the virtual image object is positioned in a central area of the field-of-view region, and the display mode is set as the planar image when the virtual image object is positioned in an area other than the central area of the field-of-view region.

According to the above configuration, the virtual image object displayed as the stereoscopic image and the virtual image object displayed as the planar image can be appropriately switched according to the position of the virtual image object in the field-of-view region of the occupant.

Further, in the head-up display according to the present disclosure, in a case where the predetermined condition is the traveling scene of the vehicle, the controller may control the image generation unit such that the display mode is set as the stereoscopic image when the vehicle travels on a general road, and the display mode is set as the planar image when the vehicle travels on an expressway.

According to the above configuration, the virtual image object displayed as the stereoscopic image and the virtual image object displayed as the planar image can be appropriately switched according to the traveling scene of the vehicle.

In order to achieve the above-described objects, a head-up display according to an aspect of the present disclosure is a head-up display provided in a vehicle and configured to display a predetermined image toward an occupant of the vehicle, the head-up display including:
an image generation unit configured to emit light for generating the predetermined image and to irradiate a windshield or a combiner; and
a controller configured to control an operation of the image generation unit,
in which the controller controls the image generation unit to change a display mode of a virtual image object formed by the predetermined image and visually recognized by the occupant through the windshield or the combiner based on a target object in the real space, and
in which when changing the display mode, in a case where a first distance that is a distance from the occupant to the target object is equal to or smaller than a predetermined threshold, a second distance that is a distance from the occupant to the virtual image object is changed corresponding to the first distance, and in a case where the first distance is larger than the predetermined threshold, the second distance is constant.

When virtual image objects are displayed in association with target objects that exist around the vehicle, it is desirable to change a distance of each virtual image object according to a distance of the target object in order to reduce the discomfort of the occupant. However, when distances of the virtual image objects are made variable according to distances of all target objects, a high processing load may be applied. In such a state, according to the above configuration, when the distance of the target object is equal to or smaller than the threshold, the distance of the virtual image object is changed according to the distance of the target object, and when the distance of the target object is larger than the threshold, the distance of the virtual image object is constant. Accordingly, it is possible to reduce the discomfort given to the occupant while suppressing the processing load at the time of generating the image of the object.

Further, in the head-up display according to the present disclosure, when the first distance is larger than the predetermined threshold, the second distance may be set to be equal to or larger than the predetermined threshold.

According to the above configuration, the virtual image object whose distance is constant is displayed at a distance equal to or larger than the threshold, so that it is possible to reduce the discomfort given to the occupant.

Further, in the head-up display according to the present disclosure, the predetermined threshold may be changed according to a predetermined condition.

According to the above configuration, it is possible to determine an appropriate threshold in consideration of a balance between the reduction of the discomfort and the suppression of the processing load.

Further, in the head-up display according to the present disclosure, the predetermined condition includes an illuminance around the vehicle, and the predetermined threshold may be increased as the illuminance is increased.

According to the above configuration, when surroundings of the vehicle are bright, the occupant can clearly visually recognize the surroundings from a long distance. Therefore, it is preferable to increase the threshold as the illuminance increases to reduce the discomfort given to the occupant as much as possible.

Further, in the head-up display according to the present disclosure, the predetermined condition includes a traveling speed of the vehicle, and the predetermined threshold may be increased as the traveling speed is increased.

According to the above configuration, by increasing the threshold as the traveling speed of the vehicle increases, the occupant can accurately grasp the target object or the virtual image object at a long distance.

Further, in the head-up display according to the present disclosure, when the first distance is larger than the predetermined threshold, a size of the virtual image object to be displayed may be changed according to the first distance.

According to the above configuration, by making the size of the virtual image object whose distance is constant variable, it is possible to simulatively display the virtual image object at a distant position with perspective.

In order to achieve the above-described objects, a head-up display according to an aspect of the present disclosure is a head-up display provided in a vehicle and configured to display a predetermined image toward an occupant of the vehicle, the head-up display including:
an image generation unit configured to emit light for generating the predetermined image and to irradiate a windshield or a combiner; and
a controller configured to control an operation of the image generation unit,
in which when determining that a virtual image object formed by the predetermined image and visually recognized by the occupant through the windshield or the combiner is visually recognized by the occupant such that the virtual image object overlaps a target object that exists around the vehicle, and when determining based on distance information between the target object and the occupant that a distance between the virtual image object and the occupant is larger than a distance between the target object and the occupant, the controller controls the image generation unit such that display of the predetermined image is weakened in at least a region that overlaps the target object in the virtual image object.

In a state where a target object that exists around the vehicle is positioned closer than the virtual image object, when the virtual image object is visually recognized overlapping the target object, since the virtual image object appears to be embedded in the target object, the discomfort may be given to the occupant. Further, it is difficult for the occupant of the vehicle to recognize which one of the target object and the virtual image object is closer. In such a state, according to the above configuration, it is possible to cause the occupant to recognize the weakened region in the virtual image object that overlaps the target object. Accordingly, the occupant can easily recognize that the target object is positioned nearby, and the discomfort given to the occupant can be reduced.

Further, in the head-up display according to the present disclosure, when the predetermined image is related to the target object, the controller may control the image generation unit such that display of the predetermined image is not weakened but has a standard concentration for the overlapping region.

According to the above configuration, when the virtual image object is related to the target object, the virtual image object is visually recognized at the standard concentration without being weakened, so that the occupant can positively recognize the virtual image object.

Further, in the head-up display according to the present disclosure, the controller may control the image generation unit such that the entire predetermined image is weakened when only a part of the virtual image object overlaps the target object.

According to the above configuration, even when only a part of the virtual image object overlaps the target object, it is easy for the occupant to visually recognize the target object by recognizing the weakened entire virtual image object.

Further, in the head-up display according to the present disclosure, the controller may control the image generation unit such that at least one of a plurality of predetermined images that form a plurality of virtual image objects is weakened when the plurality of virtual image objects overlap the target object.

According to the above configuration, when the plurality of virtual image objects overlap the target object, at least one weakened virtual image object is visually recognized, so that the discomfort given to the occupant can be reduced.

Further, in the head-up display according to the present disclosure, the controller may determine a predetermined image to be weakened among the plurality of predetermined images based on a degree of overlapping or importance of each of the plurality of virtual image objects.

According to the above configuration, the weakened virtual image object to be visually recognized can be appropriately determined according to a situation.

In order to achieve the above-described objects, a head-up display according to an aspect of the present disclosure is a head-up display provided in a vehicle and configured to display a predetermined image toward an occupant of the vehicle, the head-up display including:
an image generation unit configured to emit light for generating the predetermined image; and
a controller configured to control an operation of the image generation unit,
in which the controller controls the image generation unit to generate a predetermined image corresponding to a light pattern based on information indicating that at least a part of the light pattern irradiates a blind spot region that cannot be visually recognized by an occupant of the vehicle by a road surface drawing apparatus configured to emit the light pattern toward a road surface outside the vehicle.

According to the above configuration, when the light pattern emitted by the road surface drawing apparatus cannot be visually recognized by the occupant of the vehicle, the predetermined image corresponding to the light pattern is displayed by the head-up display, so that the occupant of the vehicle can accurately recognize the light pattern irradiating an outside of the vehicle. That is, it is possible to provide a head-up display with improved usability.

Further, when the information includes information indicating that only a part of the light pattern irradiates the blind spot region, the controller may control the image generation unit to generate a predetermined image corresponding to the entire light pattern.

According to the above configuration, even when only a part of the light pattern cannot be visually recognized, the image corresponding to the entire light pattern is displayed by the head-up display, so that the occupant of the vehicle can more accurately recognize the light pattern irradiating the outside of the vehicle.

Further, an emission angle of light by the road surface drawing apparatus or an irradiation range of light on a road surface by the road surface drawing apparatus may be defined corresponding to the blind spot region, and the information may be based on the emission angle of light by the road surface drawing apparatus or the irradiation range of light on the road surface by the road surface drawing apparatus.

As described above, when the emission angle of light by the road surface drawing apparatus or the irradiation range of light on the road surface by the road surface drawing apparatus that corresponds to the blind spot region is defined in advance, it is not necessary to detect the light pattern actually drawn on the road surface and to determine whether the light pattern can be visually recognized by the occupant.

In order to achieve the above-described objects, a vehicle display system according to an aspect of the present disclosure including:
a head-up display provided in a vehicle and configured to display a predetermined image toward an occupant of the vehicle;
a road surface drawing apparatus provided in the vehicle and configured to emit a light pattern toward a road surface outside the vehicle; and
a controller configured to control an operation of at least the head-up display,
in which the controller controls the head-up display to generate a predetermined image corresponding to the light pattern based on information indicating that at least a part of the light pattern irradiates a blind spot region that cannot be visually recognized by an occupant of the vehicle by the road surface drawing apparatus.

According to the above configuration, when the light pattern emitted by the road surface drawing apparatus cannot be visually recognized by the occupant of the vehicle, the predetermined image corresponding to the light pattern is displayed by the head-up display, so that the occupant of the vehicle can accurately recognize the light pattern irradiating an outside of the vehicle. That is, it is possible to provide a vehicle display system with improved usability.

Further, when the information includes information indicating that only a part of the light pattern irradiates the blind spot region, the controller may control the head-up display to generate the predetermined image corresponding to the entire light pattern.

According to the above configuration, even when only a part of the light pattern cannot be visually recognized, the image corresponding to the entire light pattern is displayed by the head-up display, so that the occupant of the vehicle can more accurately recognize the light pattern irradiating the outside of the vehicle.

Further, an emission angle of light by the road surface drawing apparatus or an irradiation range of light on a road surface by the road surface drawing apparatus may be defined corresponding to the blind spot region, and the controller may determine whether at least a part of a light pattern irradiates the blind spot region that cannot be visually recognized by an occupant of the vehicle by the road surface drawing apparatus based on the emission angle of light by the road surface drawing apparatus or the irradiation range of light on the road surface by the road surface drawing apparatus.

When the blind spot region is defined in advance as described above, it is not necessary to detect the light pattern actually drawn on the road surface and to determine whether the light pattern can be visually recognized by the occupant.

In order to achieve the above-described objects, a head-up display according to an aspect of the present disclosure is a head-up display provided in a vehicle and configured to display a predetermined image toward an occupant of the vehicle, the head-up display including:
an image generation unit configured to emit light for generating the predetermined image; and
a controller configured to control an operation of the image generation unit,
in which the controller controls the image generation unit to generate a predetermined image corresponding to a light pattern in a color different from a color of the light pattern based on color information of the light pattern emitted by a road surface drawing apparatus configured to emit the light pattern toward a road surface outside the vehicle.

According to the above configuration, by displaying the predetermined image corresponding to the light pattern drawn on the road surface, the occupant of the vehicle easily recognizes the displayed light pattern and the displayed image. Further, since the light pattern and the predetermined image are visually recognized in different colors, visibility when the occupant visually recognizes the light pattern and the predetermined image is good.

Further, the controller may control the image generation unit to generate the predetermined image in a color different from white when the color information of the light pattern is information indicating white.

Road surface drawing may be limited to white display in order to prevent erroneous recognition by a driver, a pedestrian, or the like outside the vehicle. Even in such a case, according to the above configuration, since the predetermined image is displayed in a color different from white, the visibility when the occupant visually recognizes the predetermined image is further improved.

In order to achieve the above-described objects, a vehicle display system according to an aspect of the present disclosure including:
a head-up display provided in a vehicle and configured to display a predetermined image toward an occupant of the vehicle;
a road surface drawing apparatus provided in the vehicle and configured to emit a light pattern toward a road surface outside the vehicle; and
a controller configured to control an operation of at least one of the head-up display and the road surface drawing apparatus,
in which the controller controls the operation such that the predetermined image and the light pattern correspond to each other and the predetermined image and the light pattern have different colors.

According to the above configuration, by displaying the predetermined image corresponding to the light pattern drawn on the road surface, the occupant of the vehicle easily recognizes the displayed light pattern and the displayed image. Further, since the light pattern and the predetermined image are visually recognized in different colors, visibility when the occupant visually recognizes the light pattern and the predetermined image is good.

Further, when a color of the light pattern is white, the controller may control the head-up display to generate the predetermined image in a color different from white.

Road surface drawing may be limited to white display in order to prevent erroneous recognition by a driver, a pedestrian, or the like outside the vehicle. Even in such a case, according to the above configuration, since the predetermined image is displayed in a color different from white, the visibility when the occupant visually recognizes the predetermined image is further improved.

In order to achieve the above-described objects, a vehicle display method according to an aspect of the present disclosure is a vehicle display method for performing display by using a head-up display provided in a vehicle and configured to display a predetermined image toward an occupant of the vehicle, and a road surface drawing apparatus provided in the vehicle and configured to emit a light pattern toward a road surface outside the vehicle,
in which the predetermined image is displayed by the head-up display and the light pattern is emitted by the road surface drawing apparatus such that the predetermined image and the light pattern correspond to each other and the predetermined image and the light pattern have different colors.

According to the above configuration, by displaying the predetermined image corresponding to the light pattern drawn on the road surface, the occupant of the vehicle easily recognizes the displayed light pattern and the displayed image. Further, since the light pattern and the predetermined image are visually recognized in different colors, visibility when the occupant visually recognizes the light pattern and the predetermined image is good.

Further, the light pattern is displayed in white, and the predetermined image may be displayed in a color different from white.

Road surface drawing may be limited to white display in order to prevent erroneous recognition by a driver, a pedestrian, or the like outside the vehicle. Even in such a case, according to the above configuration, since the predetermined image is displayed in a color different from white, the visibility when the occupant visually recognizes the predetermined image is further improved.

In order to achieve the above-described objects, a head-up display according to an aspect of the present disclosure is a head-up display provided in a vehicle and configured to display a predetermined image toward an occupant of the vehicle, the head-up display including:
an image generation unit configured to emit light for generating the predetermined image;
a reflection portion configured to reflect light such that the light emitted by the image generation unit irradiates a windshield or a combiner;
a drive unit for swinging at least one of a direction of the reflection portion and the image generation unit; and
a controller configured to control an operation of the image generation unit,
in which the controller changes an emission position of light of the image generation unit according to a swing of at least one of a direction of the reflection portion and the image generation unit by the drive unit.

According to the above configuration, even when external light such as sunlight incident from an outside of the vehicle is reflected by the reflection portion and irradiates the image generation unit, since at least one of the direction of the reflection portion and the image generation unit is swung, a position of the image generation unit which is irradiated by the external light can be changed. Accordingly, it is possible to prevent the image generation unit from being continuously irradiated with the external light locally, to prevent an excessive temperature rise of the image generation unit, and to prevent deterioration of the image generation unit due to heat. In this way, it is possible to prevent the temperature rise of the image generation unit at a low cost by a simple method of swinging the reflection portion or the image generation unit.

Further, even when at least one of the direction of the reflection portion and the image generation unit is swung, the emission position of light of the image generation unit is changed according to the swing, so that an image formation position on the windshield or the combiner is controlled to be a desired position, and discomfort is prevented from occurring to the occupant of the vehicle.

That is, according to the above configuration, it is possible to prevent occurrence of heat damage due to the external light without causing quality of image generation to be displayed to the occupant to deteriorate.

Further, in the head-up display according to the present disclosure, the reflection portion may include a concave mirror.

According to the above configuration, even when the external light irradiates the image generation unit in a state where the external light is reflected and focused by the concave mirror, it is possible to prevent the deterioration of the image generation unit due to heat.

Further, the head-up display according to the present disclosure further includes a heat sensor configured to detect a temperature rise of the image generation unit,
in which the drive unit may swing at least one of a direction of the reflection portion and the image generation unit in response to detection of a temperature rise by the heat sensor.

According to the above configuration, at least one of the direction of the reflection portion and the image generation unit is swung when the external light irradiates the image generation unit and the temperature rises. That is, it is possible to prevent a drive unit from performing an unnecessary operation and to lengthen a life of the drive unit. Further, energy consumption of the drive unit can be reduced.

Further, the head-up display according to the present disclosure further includes an optical sensor configured to detect external light incident on the reflection portion,
in which the drive unit may swing at least one of a direction of the reflection portion and the image generation unit in response to detection of external light by the optical sensor.

According to the above configuration, at least one of the direction of the reflection portion and the image generation unit is swung when the external light is reflected by the reflection portion and irradiates the image generation unit. That is, it is possible to prevent a drive unit from performing an unnecessary operation and to lengthen a life of the drive unit. Further, energy consumption of the drive unit can be reduced.

Further, in the head-up display according to the present disclosure, an emission position of the light of the image generation unit may be changed to a position where a focusing region of external light incident on the image generation unit before movement of at least one of the reflection portion and the image generation unit and a focusing region of the external light after movement of at least one of the reflection portion and the image generation unit do not overlap each other.

According to the above configuration, it is possible to reliably prevent a local temperature rise of the image generation unit.

Further, in order to achieve the above-described objects, a head-up display according to an aspect of the present disclosure is a head-up display provided in a vehicle and configured to display a predetermined image toward an occupant of the vehicle, the head-up display including:
an image generation unit configured to emit light for generating the predetermined image;
a reflection portion configured to reflect light such that the light emitted by the image generation unit irradiates a windshield or a combiner;
an optical member configured to cause the light emitted from the image generation unit to pass through and to cause the light to be incident on the reflection portion;
a drive unit for swinging the optical member; and
a controller configured to control an operation of the image generation unit,
in which the controller changes an emission position of light of the image generation unit according to a swing of the optical member by the drive unit.

According to the above configuration, it is possible to prevent occurrence of heat damage due to the external light without causing quality of image generation to be displayed to the occupant to deteriorate.

### ADVANTAGEOUS EFFECTS OF INVENTION

According to the present disclosure, it is possible to provide a head-up display that can reduce discomfort given to an occupant while suppressing a processing load applied to image generation.

According to the present disclosure, it is possible to provide a head-up display and a vehicle display system with improved usability.

According to the present disclosure, it is possible to provide a head-up display, a vehicle display system, and a vehicle display method that allow an occupant of a vehicle to easily recognize a displayed light pattern and a displayed image.

According to the present disclosure, it is possible to provide a head-up display that can prevent occurrence of heat damage due to external light without causing quality of image generation to be displayed to an occupant to deteriorate.

### BRIEF DESCRIPTION OF DRAWINGS

[Fig. 1] Fig. 1 is a block diagram of a vehicle system including a vehicle display system.
[Fig. 2] Fig. 2 is a schematic diagram of a head-up display (HUD) according to the present embodiment included in the vehicle display system.
[Fig. 3] Fig. 3 is a diagram showing a first example of a field-of-view region in a state where virtual image objects are displayed by the HUD according to a first embodiment such that the virtual image objects are superimposed on a real space outside a vehicle.
[Fig. 4] Fig. 4 is a schematic diagram showing a relationship between a distance from a viewpoint of an occupant of the vehicle to a target object and a threshold.
[Fig. 5] Fig. 5 is a diagram showing a second example of the field-of-view region in a state where the virtual image objects are displayed by the HUD such that the virtual image objects are superimposed on the real space outside the vehicle.
[Fig. 6] Fig. 6 is a diagram showing a third example of the field-of-view region in a state where the virtual image objects are displayed by the HUD such that the virtual image objects are superimposed on the real space outside the vehicle.
[Fig. 7A] Fig. 7A is a diagram showing a fourth example of the field-of-view region in a state where the virtual image objects are displayed by the HUD such that the virtual image objects are superimposed on the real space outside the vehicle.
[Fig. 7B] Fig. 7B is a diagram showing the fourth example of the field-of-view region in a state where the virtual image object is displayed by the HUD such that the virtual image object is superimposed on the real space outside the vehicle.
[Fig. 8] Fig. 8 is a schematic diagram of a HUD according to a modified example.
[Fig. 9] Fig. 9 is a diagram showing a first example of the field-of-view region in a state where virtual image objects are displayed by the HUD according to a second embodiment such that the virtual image objects are superimposed on a real space outside a vehicle.
[Fig. 10] Fig. 10 is a schematic diagram showing a relationship between a distance from a viewpoint of an occupant of the vehicle to a target object and a threshold.
[Fig. 11] Fig. 11 is a flowchart for illustrating control of a HUD according to a third embodiment.
[Fig. 12] Fig. 12 is a diagram showing an example of the field-of-view region in a state where virtual image objects are displayed by the HUD according to the third embodiment such that the virtual image objects are superimposed on the real space outside the vehicle.
[Fig. 13] Fig. 13 is a diagram showing an example of the field-of-view region in a state where the virtual image objects are displayed by the HUD according to the third embodiment such that the virtual image objects are superimposed on the real space outside the vehicle.
[Fig. 14] Fig. 14 is a diagram showing another example of the field-of-view region in a state where the virtual image objects are displayed by the HUD according to the third embodiment such that the virtual image objects are superimposed on the real space outside the vehicle.
[Fig. 15] Fig. 15 is a diagram showing still another example of the field-of-view region in a state where the virtual image objects are displayed by the HUD according to the third embodiment such that the virtual image objects are superimposed on the real space outside the vehicle.
[Fig. 16] Fig. 16 is a diagram showing an example of a front side of the vehicle as viewed from a driver in a fourth embodiment.
[Fig. 17] Fig. 17 is a schematic diagram of a light pattern irradiating a blind spot region in front of the vehicle as viewed from above the vehicle in the fourth embodiment.
[Fig. 18] Fig. 18 is a diagram showing an example of a windshield on which an image corresponding to the light pattern of Fig. 17 is displayed.
[Fig. 19] Fig. 19 is a schematic diagram of a light pattern partially irradiating the blind spot region in front of the vehicle as viewed from above the vehicle.
[Fig. 20] Fig. 20 is a diagram showing an example of the windshield on which an image corresponding to the light pattern of Fig. 19 is displayed.
[Fig. 21] Fig. 21 is a diagram showing an example of the windshield on which a light pattern and a virtual image object corresponding to each other are displayed in an overlapping manner in a fifth embodiment.
[Fig. 22A] Fig. 22A is a diagram showing an example of the light pattern and the virtual image object of Fig. 21.
[Fig. 22B] Fig. 22B is a diagram showing another example of the light pattern and the virtual image object that are displayed on the windshield and correspond to each other.
[Fig. 22C] Fig. 22C is a diagram showing another example of the light pattern and the virtual image object that are displayed on the windshield and correspond to each other.
[Fig. 22D] Fig. 22D is a diagram showing another example of the light pattern and the virtual image object that are displayed on the windshield and correspond to each other.
[Fig. 23] Fig. 23 is a schematic diagram showing a configuration of a HUD main body portion of a HUD according to a sixth embodiment.
[Fig. 24] Fig. 24 is a schematic diagram showing a relationship between a swing of a direction of a reflection portion and an emission position of light of the image generation unit, in which the reflection portion and the image generation unit are mounted on the HUD main body portion according to the sixth embodiment.
[Fig. 25] Fig. 25 is a schematic diagram showing a relationship between a swing and an emission position of light of the image generation unit according to a modified example of the sixth embodiment.

### DESCRIPTION OF EMBODIMENTS

Hereinafter, an embodiment of the present invention (hereinafter, referred to as the present embodiment) will be described with reference to the drawings. Dimensions of members shown in the drawings may be different from actual dimensions of the members for convenience of explanation.

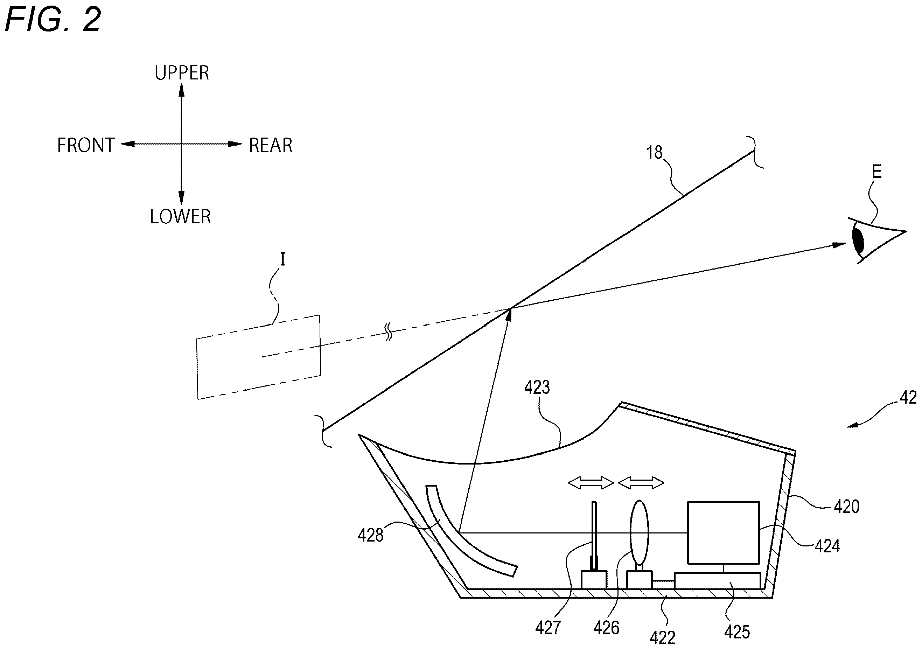

In description of the present embodiment, for convenience of description, a "left-right direction", an "upper-lower direction" and a "front-rear direction" may be appropriately referred to. These directions are relative directions set for a head-up display (HUD) 42 shown in Fig. 2. Here, the "left-right direction" is a direction including a "left direction" and a "right direction". The "upper-lower direction" is a direction including an "upper direction" and a "lower direction". The "front-rear direction" is a direction including a "forward direction" and a "rearward direction". Although not shown in Fig. 2, the left-right direction is a direction orthogonal to the upper-lower direction and the front-rear direction.

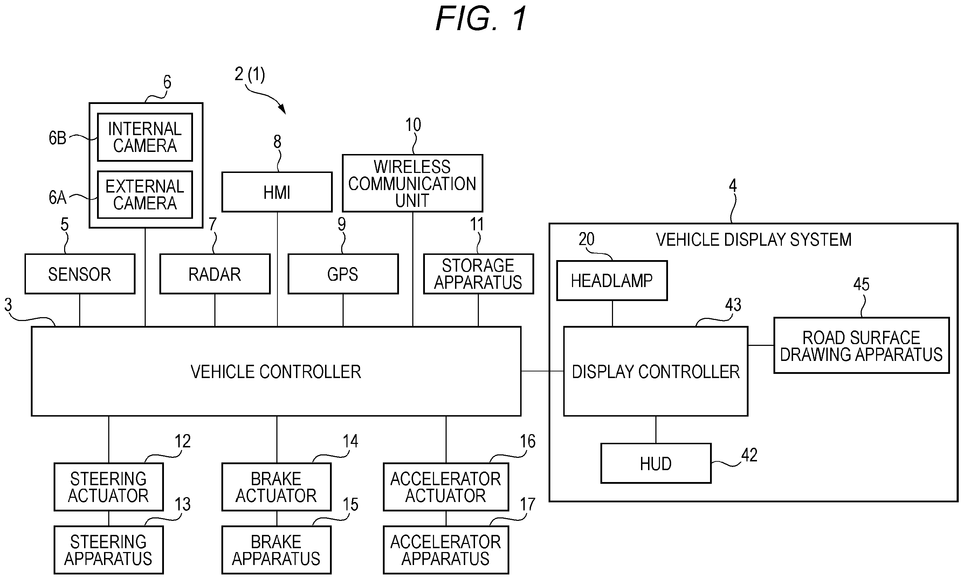

First, a vehicle system 2 according to the present embodiment will be described below with reference to Fig. 1. Fig. 1 is a block diagram of the vehicle system 2. A vehicle 1 on which the vehicle system 2 is mounted is a vehicle (an automobile) that can travel in an autonomous driving mode.

As shown in Fig. 1, the vehicle system 2 includes a vehicle controller 3, a vehicle display system 4 (hereinafter, simply referred to as "display system 4"), a sensor 5, a camera 6, and radars 7. Further, the vehicle system 2 includes a human machine interface (HMI) 8, a global positioning system (GPS) 9, a wireless communication unit 10, a storage apparatus 11, a steering actuator 12, a steering apparatus 13, a brake actuator 14, a brake apparatus 15, an accelerator actuator 16, and an accelerator apparatus 17.

The vehicle controller 3 is configured to control traveling of the vehicle. The vehicle controller 3 is configured with, for example, at least one electronic control unit (ECU). The electronic control unit includes a computer system (for example, a system on a chip (SoC), or the like) including one or more processors and one or more memories, and an electronic circuit configured with an active element such as a transistor and a passive element. The processor includes, for example, at least one of a central processing unit (CPU), a micro processing unit (MPU), a graphics processing unit (GPU), and a tensor processing unit (TPU). The CPU may be configured with a plurality of CPU cores. The GPU may be configured with a plurality of GPU cores. The memory includes a read only memory (ROM) and a random access memory (RAM). The ROM may store a vehicle control program. For example, the vehicle control program may include an artificial intelligence (AI) program for autonomous driving. An AI program is a program (a learned model) constructed by supervised or unsupervised machine learning (particularly, deep learning) using a multi-layer neural network. The RAM may temporarily store a vehicle control program, vehicle control data, and/or surrounding environment information indicating a surrounding environment of the vehicle. The processor may be configured to load a program designated from various vehicle control programs stored in the ROM on the RAM and execute various processing in cooperation with the RAM. Further, the computer system may be configured with a non-von Neumann computer such as an application specific integrated circuit (ASIC) or a field-programmable gate array (FPGA). Furthermore, the computer system may be configured with a combination of a von Neumann computer and a non-Von Neumann computer.

The display system 4 includes headlamps 20, road surface drawing apparatuses 45, a HUD 42, and a display controller 43.

The headlamps 20 are arranged on a left side and a right side of a front surface of the vehicle, and each of the headlamps 20 includes a low beam lamp configured to emit a low beam to a front of the vehicle and a high beam lamp configured to emit a high beam to the front of the vehicle 1. Each of the low beam lamp and the high beam lamp includes one or more light emitting elements such as a light emitting diode (LED) and a laser diode (LD), and an optical member such as a lens and a reflector.

The road surface drawing apparatus 45 is disposed in a lamp chamber of the headlamp 20. The road surface drawing apparatus 45 is configured to emit a light pattern toward a road surface outside the vehicle. The road surface drawing apparatus 45 includes, for example, a light source unit, a drive mirror, an optical system such as a lens and a mirror, a light source drive circuit, and a mirror drive circuit. The light source unit is a laser light source or an LED light source. For example, the laser light source is an RGB laser light source configured to emit red laser light, green laser light, and blue laser light. The drive mirror is, for example, a microelectro mechanical systems (MEMS) mirror, a digital mirror device (DMD), a galvano mirror, a polygon mirror, or the like. The light source drive circuit is configured to control driving of the light source unit. The light source drive circuit is configured to generate a control signal for controlling an operation of the light source unit based on a signal related to a predetermined light pattern transmitted from the display controller 43, and then transmit the generated control signal to the light source unit. The mirror drive circuit is configured to control driving of the drive mirror. The mirror drive circuit is configured to generate a control signal for controlling an operation of the drive mirror based on the signal related to the predetermined light pattern transmitted from the display controller 43, and then transmit the generated control signal to the drive mirror. When the light source unit is the RGB laser light source, the road surface drawing apparatus 45 can draw light patterns of various colors on a road surface by performing scanning with laser light. For example, the light pattern may be an arrow-shaped light pattern indicating an advancing direction of the vehicle.

A drawing method of the road surface drawing apparatus 45 may be a raster scan method, a digital light processing (DLP) method, or a liquid crystal on silicon (LCOS) method. When the DLP method or the LCOS method is adopted, the light source unit may be the LED light source. Further, a projection method may be adopted as a drawing method of the road surface drawing apparatus. When the projection method is adopted, the light source unit may be a plurality of LED light sources arranged in a matrix shape. The road surface drawing apparatuses 45 may be respectively arranged in the lamp chambers of the left and right headlamps, or may be arranged on a vehicle body roof, a bumper, or a grille portion.

At least a part of the HUD 42 is positioned inside the vehicle. Specifically, the HUD 42 is installed at a predetermined location in a vehicle interior. For example, the HUD 42 may be disposed in a dashboard of the vehicle. The HUD 42 functions as a visual interface between the vehicle and an occupant. The HUD 42 is configured to display HUD information toward the occupant such that predetermined information (hereinafter, referred to as HUD information) is superimposed on a real space outside the vehicle (particularly, a surrounding environment in front of the vehicle). In this way, the HUD 42 functions as an augmented reality (AR) display. The HUD information displayed by the HUD 42 is, for example, vehicle traveling information related to traveling of the vehicle and/or surrounding environment information related to a surrounding environment of the vehicle (particularly, information related to a target object that exists outside the vehicle).

As shown in Fig. 2, the HUD 42 includes a HUD main body portion 420. The HUD main body portion 420 includes a housing 422 and an emission window 423. The emission window 423 is a transparent plate through which visible light passes. The HUD main body portion 420 includes an image generation unit (PGU) 424, a HUD controller (an example of a controller) 425, a lens 426, a screen 427, and a concave mirror (an example of a reflection portion) 428 inside the housing 422.

The image generation unit 424 includes a light source, an optical component, and a display device. The light source is, for example, a laser light source or an LED light source. The laser light source is, for example, an RGB laser light source configured to emit red laser light, green laser light, and blue laser light. The optical component appropriately includes a prism, a lens, a diffusion plate, a magnifying glass, and the like. The display device is a liquid crystal display, a digital mirror device (DMD), or the like. A drawing method of the image generation unit 424 may be the raster scan method, the DLP method, or the LCOS method. When the DLP method or the LCOS method is adopted, a light source of the HUD 42 may be an LED light source. When a liquid crystal display method is adopted, the light source of the HUD 42 may be a white LED light source.

The HUD controller 425 is configured to control operations of the image generation unit 424, the lens 426, and the screen 427. The HUD controller 425 is provided with a processor such as a central processing unit (CPU) and a memory, and the processor executes a computer program read from the memory to control the operations of the image generation unit 424, the lens 426, and the screen 427. The HUD controller 425 is configured to generate a control signal for controlling an operation of the image generation unit 424 based on image data transmitted from the display controller 43, and then transmit the generated control signal to the image generation unit 424. Further, the HUD controller 425 is configured to generate control signals for adjusting positions of the lens 426 and the screen 427 based on the image data transmitted from the display controller 43, and then transmit the generated control signals to the lens 426 and the screen 427, respectively. Further, the HUD controller 425 may perform control to change a direction of the concave mirror 428.

The lens 426 is disposed on an optical path of light emitted from the image generation unit 424. The lens 426 includes, for example, a convex lens, and is configured to project an image generated by the image generation unit 424 onto the screen 427 in a desired size. Further, the lens 426 includes a drive unit, and is configured to be able to move in parallel at a higher response speed in response to a control signal generated by the HUD controller 425 to change a distance from the image generation unit 424.

The screen 427 is disposed on the optical path of the light emitted from the image generation unit 424. The light emitted from the image generation unit 424 passes through the lens 426 and is projected onto the screen 427. Further, the screen 427 includes a drive unit, and is configured to be able to move in parallel at a higher response speed in response to a control signal generated by the HUD controller 425 to change a distance from the image generation unit 424 and the lens 426.

The image generation unit 424 may include the lens 426 and the screen 427. Further, the lens 426 and the screen 427 may not be provided.

The concave mirror 428 is disposed on the optical path of the light emitted from the image generation unit 424. The concave mirror 428 reflects light that is emitted by the image generation unit 424 and passes through the lens 426 and the screen 427 toward a windshield 18. The concave mirror 428 has a reflection surface curved in a concave shape in order to form a virtual image, and reflects an image of light formed on the screen 427 at a predetermined magnification.

Light emitted from the HUD main body portion 420 irradiates the windshield 18 (for example, a front window of the vehicle 1). Next, a part of the light emitted from the HUD main body portion 420 to the windshield 18 is reflected toward a viewpoint E of the occupant. As a result, the occupant recognizes the light (a predetermined image) emitted from the HUD main body portion 420 as a virtual image formed at a predetermined distance in front of the windshield 18. In this way, as a result, the image displayed by the HUD 42 is superimposed on the real space in front of vehicle 1 through the windshield 18. The occupant can visually recognize a virtual image object I formed by the predetermined image such that the virtual image object I floats on a road positioned outside the vehicle.

A distance of the virtual image object I (a distance from the viewpoint E of the occupant to the virtual image) can be appropriately adjusted by adjusting the positions of the lens 426 and the screen 427. When a 2D image (a planar image) is formed as the virtual image object I, the predetermined image is projected so as to be a virtual image at an optionally determined single distance. When a 3D image (a stereoscopic image) is formed as the virtual image object I, a plurality of predetermined images that are the same as each other or different from each other are projected so as to be virtual images respectively at different distances.

The display controller 43 is configured to control operations of the road surface drawing apparatuses 45, the headlamps 20, and the HUD 42. The display controller 43 is configured with an electronic control unit (ECU). The electronic control unit includes a computer system (for example, a SoC) including one or more processors and one or more memories, and an electronic circuit configured with an active element such as a transistor and a passive element. The processor includes at least one of a CPU, an MPU, a GPU, and a TPU. The memory includes a ROM and a RAM. Further, the computer system may be configured with a non-von Neumann computer such as an ASIC or FPGA.

In the present embodiment, the vehicle controller 3 and the display controller 43 are provided as separate configurations, but the vehicle controller 3 and the display controller 43 may be integrally configured. In this regard, the display controller 43 and the vehicle controller 3 may be configured with a single electronic control unit. Further, the display controller 43 may be configured with two electronic control units, that is, an electronic control unit configured to control the operations of the headlamps 20 and the road surface drawing apparatuses 45 and an electronic control unit configured to control the operation of the HUD 42. Further, the HUD controller 425 that controls the operation of the HUD 42 may be configured as a part of the display controller 43.

The sensor 5 includes at least one of an acceleration sensor, a speed sensor, and a gyro sensor. The sensor 5 is configured to detect a traveling state of the vehicle and output traveling state information to the vehicle controller 3. The sensor 5 may further include a seating sensor that detects whether a driver sits on a driver seat, a face direction sensor that detects a direction of a face of the driver, an external weather sensor that detects an external weather condition, a human sensor that detects whether there is a person in the vehicle, and the like.

The camera 6 is, for example, a camera including an imaging element such as a charge-coupled device (CCD) or a complementary MOS (CMOS). The camera 6 includes one or more external cameras 6A and an internal camera 6B. The external camera 6A is configured to acquire image data indicating the surrounding environment of the vehicle and then transmit the image data to the vehicle controller 3. The vehicle controller 3 acquires the surrounding environment information based on the transmitted image data. Here, the surrounding environment information may include information on a target object (a pedestrian, other vehicles, a sign, or the like) that exists outside the vehicle. For example, the surrounding environment information may include information on an attribute of the target object that exists outside the vehicle and information on a distance and a position of the target object with respect to the vehicle. The external camera 6A may be configured as a monocular camera or a stereo camera.

The internal camera 6B is disposed inside the vehicle and is configured to acquire image data indicating the occupant. The internal camera 6B functions as a tracking camera that tracks the viewpoint E of the occupant. Here, the viewpoint E of the occupant may be either a viewpoint of a left eye or a viewpoint of a right eye of the occupant. Alternatively, the viewpoint E may be defined as a midpoint of a line segment that connects the viewpoint of the left eye and the viewpoint of the right eye. The display controller 43 may specify a position of the viewpoint E of the occupant based on the image data acquired by the internal camera 6B. The position of the viewpoint E of the occupant may be updated at a predetermined cycle based on the image data, or may be determined only once when the vehicle is started.

The radar 7 includes at least one of a millimeter-wave radar, a microwave radar, and a laser radar (for example, a LiDAR unit). For example, the LiDAR unit is configured to detect the surrounding environment of the vehicle. Particularly, the LiDAR unit is configured to acquire 3D mapping data (point group data) indicating the surrounding environment of the vehicle and then transmit the 3D mapping data to the vehicle controller 3. The vehicle controller 3 specifies the surrounding environment information based on the transmitted 3D mapping data.

The HMI 8 is configured with an input unit that receives an input operation from the driver, and an output unit that outputs the traveling information or the like to the driver. The input unit includes a steering wheel, an accelerator pedal, a brake pedal, a driving mode switching switch that switches a driving mode of the vehicle, and the like. The output unit is a display (excluding the HUD) that displays various pieces of traveling information. The GPS 9 is configured to acquire current position information of the vehicle and output the acquired current position information to the vehicle controller 3.

The wireless communication unit 10 is configured to receive information (for example, traveling information or the like) on another vehicle around the vehicle from another vehicle and transmit information (for example, traveling information or the like) on the vehicle to another vehicle (vehicle-to-vehicle communication). Further, the wireless communication unit 10 is configured to receive infrastructure information from an infrastructure facility such as a traffic light or a sign lamp and transmit the traveling information of the vehicle 1 to the infrastructure facility (road-to-vehicle communication). Further, the wireless communication unit 10 is configured to receive information on a pedestrian from a portable electronic device (a smartphone, a tablet, a wearable device, or the like) carried by the pedestrian, and transmit own vehicle traveling information of the vehicle to the portable electronic device (pedestrian-to-vehicle communication). The vehicle may directly communicate with another vehicle, the infrastructure facility, or the portable electronic device in an ad hoc mode, or may communicate via an access point. Further, the vehicle may communicate with another vehicle, the infrastructure facility, or the portable electronic device via a communication network (not shown). The communication network includes at least one of the Internet, a local area network (LAN), a wide area network (WAN), and a radio access network (RAN). A wireless communication standard is, for example, Wi-Fi (registered trademark), Bluetooth (registered trademark), ZigBee (registered trademark), IPWA, DSRC (registered trademark), or Li-Fi. Further, the vehicle 1 may communicate with another vehicle, the infrastructure facility, or the portable electronic device by using a fifth generation mobile communication system (5G).

The storage apparatus 11 is an external storage apparatus such as a hard disk drive (HDD) or a solid state drive (SSD). The storage apparatus 11 may store two-dimensional or three-dimensional map information and/or the vehicle control program. For example, the three-dimensional map information may be configured with the 3D mapping data (the point group data). The storage apparatus 11 is configured to output the map information and the vehicle control program to the vehicle controller 3 according to a request from the vehicle controller 3. The map information and the vehicle control program may be updated via the wireless communication unit 10 and the communication network.

When the vehicle travels in the autonomous driving mode, the vehicle controller 3 autonomously generates at least one of a steering control signal, an accelerator control signal, and a brake control signal based on the traveling state information, the surrounding environment information, the current position information, the map information, and the like. The steering actuator 12 is configured to receive the steering control signal from the vehicle controller 3 and control the steering apparatus 13 based on the received steering control signal. The brake actuator 14 is configured to receive the brake control signal from the vehicle controller 3 and control the brake apparatus 15 based on the received brake control signal. The accelerator actuator 16 is configured to receive the accelerator control signal from the vehicle controller 3 and control the accelerator apparatus 17 based on the received accelerator control signal. In this way, the vehicle controller 3 autonomously controls traveling of the vehicle based on the traveling state information, the surrounding environment information, the current position information, the map information, and the like. That is, in the autonomous driving mode, the traveling of the vehicle is autonomously controlled by the vehicle system 2.

On the other hand, when the vehicle 1 travels in a manual driving mode, the vehicle controller 3 generates the steering control signal, the accelerator control signal, and the brake control signal according to a manual operation of the driver on the accelerator pedal, the brake pedal, and the steering wheel. In this way, in the manual driving mode, the steering control signal, the accelerator control signal, and the brake control signal are generated by the manual operation of the driver, so that the traveling of the vehicle is controlled by the driver.

Next, the driving modes of the vehicle will be described. The driving modes include the autonomous driving mode and the manual driving mode. The autonomous driving mode includes a fully autonomous driving mode, an advanced driving support mode, and a driving support mode. In the fully autonomous driving mode, the vehicle system 2 autonomously performs all traveling control of steering control, brake control, and accelerator control, and the driver is not in a state of being able to drive the vehicle. In the advanced driving support mode, the vehicle system 2 autonomously performs all traveling control of the steering control, the brake control, and the accelerator control, and the driver is in a state of being able to drive the vehicle but does not drive the vehicle 1. In the driving support mode, the vehicle system 2 autonomously performs some traveling control of the steering control, the brake control, and the accelerator control, and the driver drives the vehicle under driving support of the vehicle system 2. On the other hand, in the manual driving mode, the vehicle system 2 does not autonomously perform traveling control, and the driver drives the vehicle without the driving support of the vehicle system 2.

### (First Embodiment)

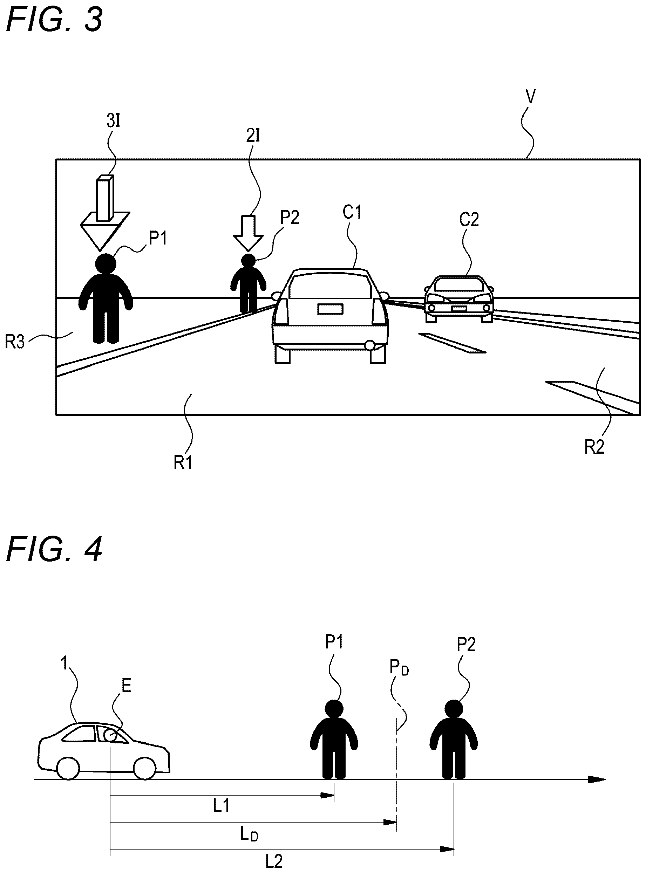

Next, an example of control related to generation of a virtual image object using the HUD 42 according to a first embodiment will be described with reference to Figs. 3 to 7.

### (First Example)

Fig. 3 is a diagram showing a state where virtual image objects are projected onto a field-of-view region V of the occupant by the HUD 42 in a first example of the first embodiment. Fig. 4 is a schematic diagram showing a relationship between a distance from the viewpoint E to the target object and a threshold.

In the example shown in Fig. 3, a preceding vehicle C1 that travels in a traveling lane (own vehicle lane) R1 in which the vehicle 1 travels and an oncoming vehicle C2 that travels in an oncoming lane R2 exist in the field-of-view region V of the occupant. Further, pedestrians P1 and P2 exist on a sidewalk R3 on a left side of the traveling lane R1.

In such a situation, the HUD controller 425 of the HUD 42 controls the image generation unit 424 to generate an image for displaying the virtual image objects in the field-of-view region V in association with positions of the pedestrians P1 and P2 in order to alert the occupant of the vehicle 1 about existence of the pedestrians P1 and P2 that are target objects. First, the HUD controller 425 acquires position information of the pedestrians P1 and P2 in the field-of-view region V The position information of the pedestrians P1 and P2 includes information on distances from the viewpoint E (see Fig. 2) of the occupant of the vehicle 1 to the pedestrians P1 and P2 that are the target objects. A position and a distance of each of the pedestrians P1 and P2 are calculated from, for example, data indicating the surrounding environment of the vehicle acquired by the radars 7 or the external cameras 6A. In a case where a distance between the radars 7 or the external cameras 6A and the viewpoint E is far, for example, when the radars 7 are mounted inside the headlamps 20 of the vehicle 1, a distance from the radars 7 or the like to the viewpoint E is added to a distance from the radars 7 or the like to the target object to be able to calculate a distance from the viewpoint E to the target object.

Next, the HUD controller 425 determines whether the distance from the viewpoint E to the target object is equal to or smaller than a predetermined threshold. For example, as shown in Fig. 4, it is determined whether a distance L1 from the viewpoint E to the pedestrian P1 and a distance L2 from the viewpoint E to the pedestrian P2 are equal to or smaller than a distance (a threshold distance) L_{D} from the viewpoint E to a predetermined threshold P_{D}. In this example, it is assumed that the distance L1 from the viewpoint E to the pedestrian P1 is equal to or smaller than the threshold distance L_{D}, and the distance L2 from the viewpoint E to the pedestrian P2 is larger than the threshold distance L_{D}.

As a result of the distance determination of the target object, the HUD controller 425 performs control such that a virtual image object is generated as a stereoscopic image for a target object whose distance from the viewpoint E is equal to or smaller than a threshold, and a virtual image object is generated as a planar image for a target object whose distance from the viewpoint E is larger than the threshold. Specifically, as shown in Fig. 3, the HUD controller 425 adjusts the positions of the lens 426 and the screen 427 such that a virtual image object 3I (hereinafter, referred to as a stereoscopic virtual image object 3I) as a stereoscopic image is projected above a head of the pedestrian P1 whose distance from the viewpoint E is equal to or smaller than the threshold distance L_{D}. On the other hand, the HUD controller 425 adjusts the positions of the lens 426 and the screen 427 such that a virtual image object 2I (hereinafter, referred to as a planar virtual image object 2I) as a planar image is displayed above a head of the pedestrian P2 whose distance from the viewpoint E is larger than the threshold distance L_{D}. Instead of switching between the planar virtual image object 2I and the stereoscopic virtual image object 3I by adjusting the positions of the lens 426 and the screen 427, the planar virtual image object 2I and the stereoscopic virtual image object 3I may be switched by adjusting emitted light emitted from the image generation unit 424.

Incidentally, when the planar virtual image object 2I is displayed in association with a target object that exists around the vehicle 1, since a planar virtual image object that is a two-dimensional object is displayed for a target object that is a three-dimensional object, the occupant may feel uncomfortable. On the other hand, if all the virtual image objects projected in the field-of-view region V of the occupant are set as three-dimensional objects (stereoscopic virtual image objects) to generate images, a high processing load is applied, which is not realistic.

Therefore, according to the HUD 42 of the present embodiment, the HUD controller 425 controls the image generation unit to select one of the planar image and the stereoscopic image as a display mode of the virtual image object according to a predetermined condition. The "image generation unit" here includes at least one of the image generation unit 424, the lens 426, and the screen 427. In this way, in the present embodiment, the virtual image object displayed in the field-of-view region V can be switched between the planar virtual image object 2I and the stereoscopic virtual image object 3I according to a predetermined condition. Accordingly, it is possible to reduce discomfort given to the occupant while suppressing the processing load when generating an image of the virtual image object.

Particularly, in the first example, the distance from the viewpoint E to the virtual image object is set as a condition for switching between the planar virtual image object 2I and the stereoscopic virtual image object 3I. Then, the HUD controller 425 controls the image generation unit to project the stereoscopic virtual image object 3I when the distance from the viewpoint E to the virtual image object (corresponding to the distance from the viewpoint E to the target object) is equal to or smaller than a threshold, and to display the planar virtual image object 2I when the distance is larger than the threshold. Accordingly, the planar virtual image object 2I and the stereoscopic virtual image object 3I can be appropriately switched according to the projection distance of the virtual image object.

### (Second Example)

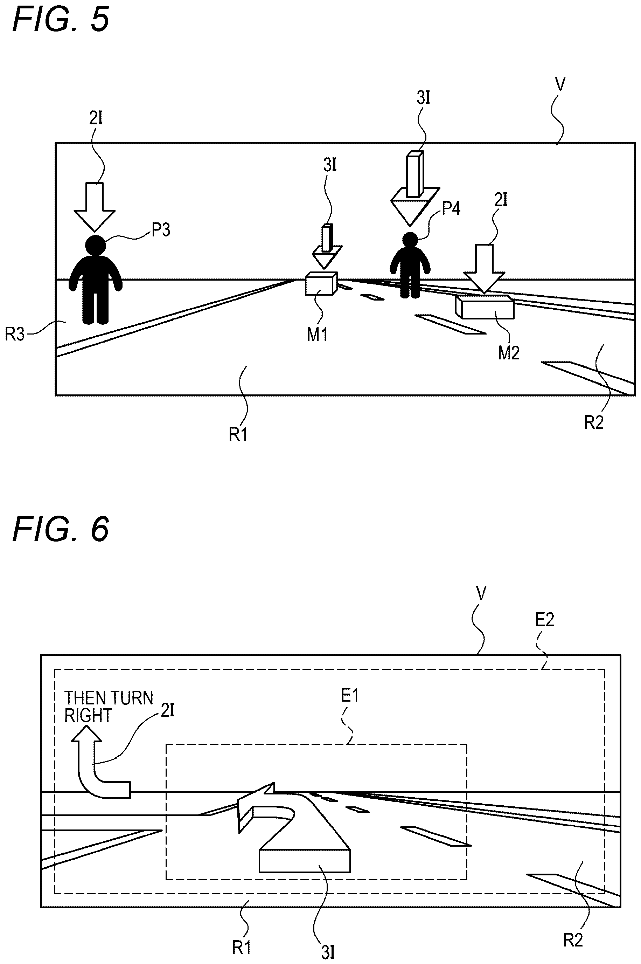

Fig. 5 is a diagram showing a state where the virtual image objects are projected onto the field-of-view region V of the occupant by the HUD 42 in a second example of the first embodiment.

In the example shown in Fig. 5, in the field-of-view region V of the occupant, an obstacle M1 exists on the traveling lane R1 in which the vehicle 1 travels, and an obstacle M2 exists on the oncoming lane R2. Further, a pedestrian P3 exists on the sidewalk R3 on the left side of the traveling lane R1 and a pedestrian P4 exists on the oncoming lane R2.

In such a situation, the HUD controller 425 may switch a display mode of a virtual image object according to an attribute of each target object regardless of a distance from the viewpoint E to the target object. The attribute of each target object is, for example, importance of each target object. The importance of the target object is, for example, a level of urgency for alerting the occupant of the vehicle 1 to danger. In this example, it is assumed that the obstacle R1 that exists on the traveling lane R1 is farther from the viewpoint E than the obstacle R2 that exists on the other lane R2, the obstacle M1 on the traveling lane R1 has high importance (urgency), and the obstacle M2 on the other lane R2 has low importance (urgency). In this case, as shown in Fig. 5, the HUD controller 425 causes the stereoscopic virtual image object 3I to be displayed above the obstacle M1 having the high importance and causes the planar virtual image object 2I to be displayed above the obstacle M2 having the low importance, regardless of a distance from the viewpoint E to each of the obstacles M1 and M2.

In this example, a plurality of pedestrians P3 and P4 exist in the field-of-view region V, and the pedestrian P3 on the sidewalk R3 is closer to the vehicle 1 than the pedestrian P4 on the other lane R2. Then, it is assumed that the pedestrian P4 on the other lane R2 is about to enter the traveling lane R1 from the other lane R2. In this case, the HUD controller 425 determines that the pedestrian P4 on the other lane R2 that is farther from the viewpoint E is higher in importance (urgency) than the pedestrian P3 on the sidewalk R3 that is closer to the viewpoint E. Therefore, as shown in Fig. 5, the HUD controller 425 causes the stereoscopic virtual image object 3I to be displayed above a head of the pedestrian P4 having the high importance and causes the planar virtual image object 2I to be displayed above a head of the pedestrian P3 having the low importance, regardless of a distance from the viewpoint E to each of the pedestrians P3 and P4.

As described above, in the second example, the attribute (for example, the importance) of each target object is set as a condition for switching between the planar virtual image object 2I and the stereoscopic virtual image object 3I. Then, the HUD controller 425 controls the image generation unit to display the stereoscopic virtual image object 3I for the target object having the high importance and display the planar virtual image object 2I for the target object having the low importance. In this way, when the importance of the target object is high, for example, when the target object has a high urgency for the occupant, the target object is easily visually recognized by the occupant by displaying the stereoscopic virtual image object 3I in association with the target object. Further, when the importance of the target object is low, a processing load applied to image generation of the object can be reduced by displaying the planar virtual image object 2I in association with the target object.

### (Third Example)

Fig. 6 is a diagram showing a state where the virtual image objects are displayed in the field-of-view region V of the occupant by the HUD 42 in a third example of the first embodiment.

In the example shown in Fig. 6, the field-of-view region V of the occupant is divided into two areas, for example, a central area E1 and a peripheral area E2 other than the central area E1.

In such a situation, the HUD controller 425 may switch the display mode of the virtual image object according to the divided areas E1 and E2 of the field-of-view region V That is, as shown in Fig. 6, an object displayed in the central area E1 is the stereoscopic virtual image object 3I, and an object displayed in the peripheral area E2 is the planar virtual image object 2I.

In this way, in the third example, the area in the field-of-view region V where the virtual image object is disposed is set as a condition for switching between the planar virtual image object 2I and the stereoscopic virtual image object 3I. Accordingly, the planar virtual image object 2I and the stereoscopic virtual image object 3I can be appropriately switched according to the arrangement area of the virtual image object in the field-of-view region V Therefore, also with the configuration of the third example, it is possible to reduce discomfort given to the occupant while suppressing a processing load as in the first example.

### (Fourth Example)

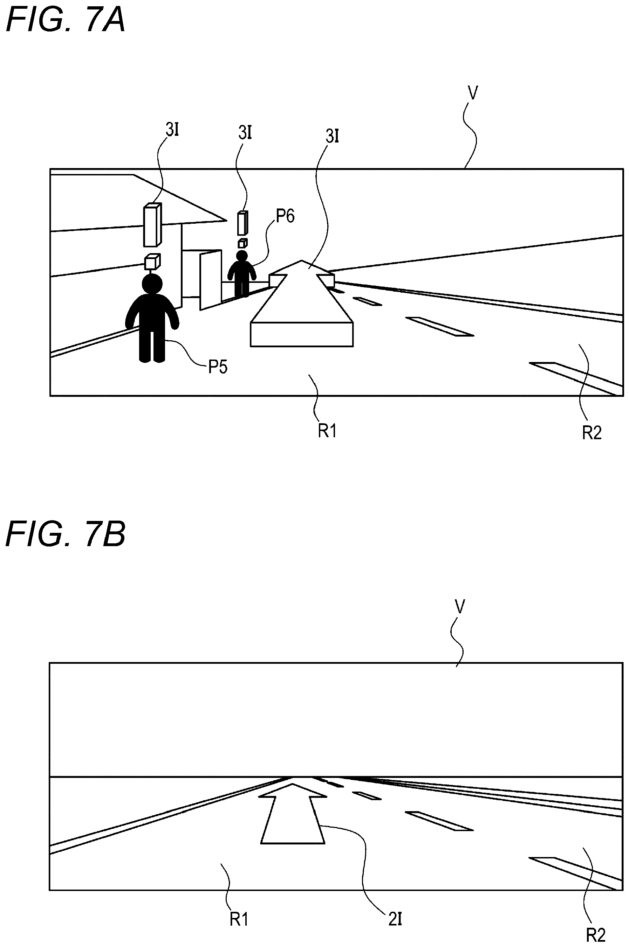

Figs. 7A and 7B are diagrams showing a state where the virtual image object is displayed in the field-of-view region V of the occupant by the HUD 42 in a fourth example of the first embodiment.

An example shown in Fig. 7A shows a state where the vehicle 1 travels on a general road. Then, a plurality of pedestrians P5 and P6 exist in the field-of-view region V of the occupant. On the other hand, an example shown in Fig. 7B shows a state where the vehicle 1 travels on an expressway (a toll road).

In such a situation, the HUD controller 425 may switch the display mode of the virtual image object according to a traveling scene of the vehicle 1. That is, as shown in Fig. 7A, when the vehicle 1 travels on the general road, the HUD controller 425 controls the image generation unit to display the stereoscopic virtual image object 3I. Specifically, the HUD controller 425 causes an arrow object indicating an advancing direction of the vehicle 1 to be displayed as the stereoscopic virtual image object 3I on the traveling lane R1 of the general road, and causes an object for an alert (for example, a surprise mark type object) to be displayed as the stereoscopic virtual image object 3I above a head of each of the pedestrians P5 and P6.

On the other hand, as shown in Fig. 7B, when the vehicle 1 travels on the expressway, the HUD controller 425 controls the image generation unit to display the planar virtual image object. Specifically, the HUD controller 425 causes the arrow object indicating the advancing direction of the vehicle 1 to be displayed as the planar virtual image object 2I on the traveling lane R1 of the expressway.

As described above, in the fourth example, a traveling scene of the vehicle 1 is set as a condition for switching between the planar virtual image object 2I and the stereoscopic virtual image object 3I. Accordingly, the planar virtual image object 2I and the stereoscopic virtual image object image 3I can be appropriately switched according to the traveling scene of the vehicle 1. For example, when the vehicle 1 travels on the general road (an urban area), since there is a target object (a pedestrian or the like) to alert the occupant, it is preferable to display the stereoscopic image 3I. On the other hand, when the vehicle 1 travels on the expressway, since there is no pedestrian or the like, it is often sufficient to display the planar virtual image object 2I. In this way, also with the configuration of the fourth example, it is possible to reduce discomfort given to the occupant while suppressing a processing load as in the first example.

The traveling scene of the vehicle 1 (whether a road is a general road or an expressway) may be determined according to a traveling speed of the vehicle 1, or may be determined based on the current position information of the vehicle acquired by the GPS 9, information (ETC information or VICS (registered trademark) information) acquired by the wireless communication unit 10, or the like.

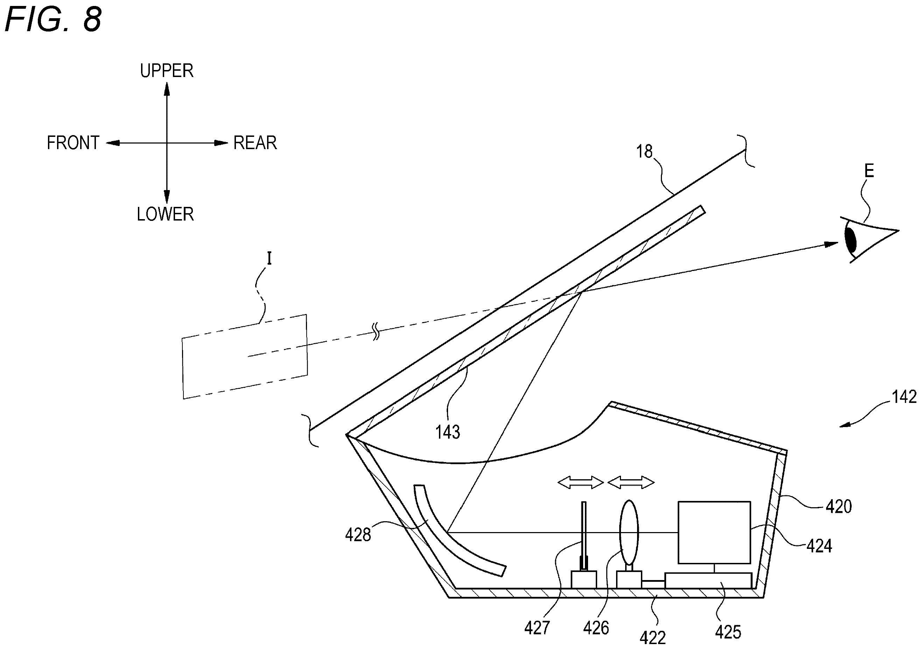

Fig. 8 is a schematic diagram showing a configuration of a HUD 142 according to a modified example.

As shown in Fig. 8, the HUD 142 according to the modified example is configured with the HUD main body portion 420 and a combiner 143. The combiner 143 is provided inside the windshield 18 as a structure separate from the windshield 18. The combiner 143 is, for example, a transparent plastic disk and irradiated by light reflected by the concave mirror 428 instead of the windshield 18. Accordingly, similar to the case where light irradiates the windshield 18, a part of light emitted from the HUD main body portion 420 to the combiner 143 is reflected toward the viewpoint E of the occupant. As a result, the occupant can recognize the emitted light (a predetermined image) from the HUD main body portion 420 as a virtual image formed at a predetermined distance in front of the combiner 143 (and the windshield 18).

Also in a case of the HUD 142 including such a combiner 143, by selecting whether a display mode of the virtual image object is a planar image or a stereoscopic image according to a predetermined condition, it is possible to reduce discomfort given to the occupant while suppressing a processing load when generating an image of the virtual image object.

### (Second Embodiment)

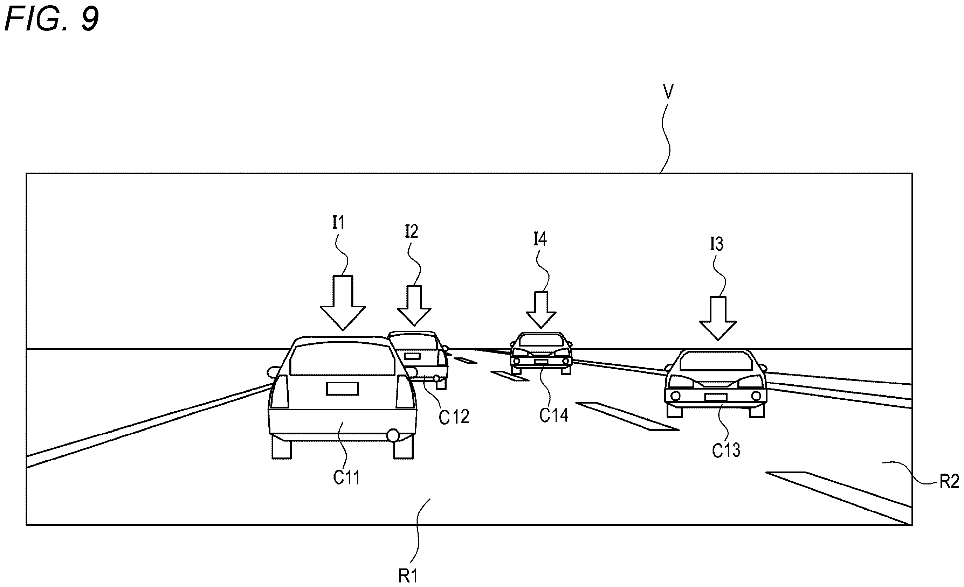

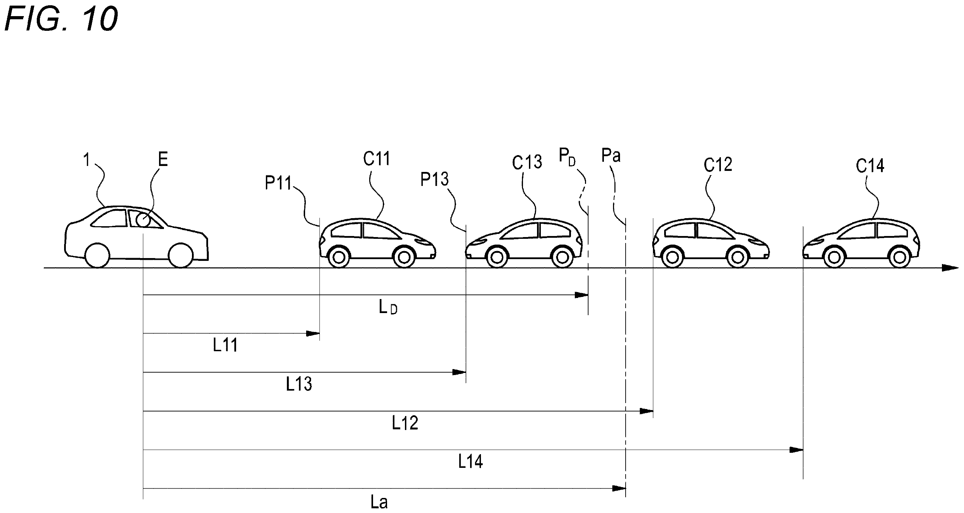

Next, an example of control related to generation of virtual image objects using the HUD 42 according to a second embodiment will be described with reference to Figs. 9 and 10.

Fig. 9 is a schematic diagram showing a state where the virtual image objects are projected onto the field-of-view region V of the occupant by the HUD 42 in a first example of the second embodiment. Fig. 10 is a schematic diagram showing a relationship between a distance from the viewpoint E to a target object and a threshold.

In the example shown in Fig. 9, in the field-of-view region V of the occupant, there are a preceding vehicle C11 that travels in the traveling lane (the own vehicle lane) R1 in which the vehicle 1 travels, a preceding vehicle C12 that travels in front of the preceding vehicle C11, an oncoming vehicle C13 that travels in the oncoming lane R2, and an oncoming vehicle C14 that travels behind the oncoming vehicle C13 (in front of the oncoming vehicle C13 when viewed from the vehicle 1).

In such a situation, the HUD controller 425 of the HUD 42 controls the image generation unit 424 to generate images for projecting virtual image objects in association with positions of the vehicles C11 to C14 in order to alert the occupant of the vehicle 1 to existence of the preceding vehicles C11 and C12 and the oncoming vehicles C13 and C14 that are target objects. At this time, first, the HUD controller 425 acquires position information of the vehicles C11 to C14 in the field-of-view region V The position information of each of the vehicles C11 to C14 includes information of a distance (an example of a first distance) from the viewpoint E (see Fig. 2) of the occupant of the vehicle 1 to each of the vehicles C11 to C14 that is a target object. That is, as shown in Fig. 10, the HUD controller 425 acquires a distance L11 from the viewpoint E to the preceding vehicle C11, a distance L12 from the viewpoint E to the preceding vehicle C12, a distance L 13 from the viewpoint E to the oncoming vehicle C13, and a distance L14 from the viewpoint E to the oncoming vehicle C14. A position and a distance of each of the vehicles C11 to C14 are calculated from, for example, data indicating a surrounding environment of the vehicle acquired by the radars 7 or the external cameras 6A. In a case where a distance between the radars 7 or the external cameras 6A and the viewpoint E is far, for example, when the radars 7 are mounted inside the headlamps 20 of the vehicle 1, the distance between the radars 7 or the like and the viewpoint E is added to a distance from the radars 7 or the like to the target object to be able to calculate a distance from the viewpoint E to the target object.

Next, the HUD controller 425 determines whether the distance from the viewpoint E to the target object is equal to or smaller than a predetermined threshold. For example, as shown in Fig. 10, the HUD controller 425 determines whether each of the distance L11 of the preceding vehicle C11, the distance L12 of the preceding vehicle C12, the distance L13 of the oncoming vehicle C13, and the distance L14 of the oncoming vehicle C14 is equal to or smaller than a distance L_{D} (an example of a predetermined threshold) at a predetermined position P_{D} from the viewpoint E. In this example, it is assumed that the distance L11 of the preceding vehicle C11 and the distance L13 of the oncoming vehicle C13 are equal to or smaller than the threshold distance L_{D}, and the distance L12 of the preceding vehicle C12 and the distance L14 of the oncoming vehicle C14 are larger than the threshold distance L_{D}.

As a result of the distance determination of the target object, the HUD controller 425 controls the image generation unit 424 to set a position of a virtual image object at a position corresponding to a distance of the target object for the target object whose distance from the viewpoint E is equal to or smaller than the threshold. That is, the HUD controller 425 sets a distance (an example of a second distance) from the viewpoint E to the virtual image object according to the distance of the target object. For example, since the distance L11 of the preceding vehicle C11 is equal to or smaller than the threshold distance L_{D}, the HUD controller 425 sets a position P11 of a virtual image object I1 at a position corresponding to the distance L11 of the preceding vehicle C11. Further, since the distance L13 of the oncoming vehicle C13 is also equal to or smaller than the threshold distance L_{D}, the HUD controller 425 sets a position P13 of a virtual image object I3 at a position corresponding to the distance L13 of the oncoming vehicle C13.

On the other hand, the HUD controller 425 controls the image generation unit 424 such that a position where a virtual image object is disposed is constant for a target object whose distance from the viewpoint E is larger than the threshold. For example, since the distance L12 of the preceding vehicle C12 is larger than the threshold distance L_{D}, the HUD controller 425 sets a position Pa set regardless of the position of the preceding vehicle C12 as a position where a virtual image object is displayed. Further, since the distance L14 of the oncoming vehicle C14 is also larger than the threshold distance L_{D}, the position Pa set regardless of the position of the oncoming vehicle C14 is set as a position where a virtual image object is displayed. That is, in a case of a target object whose distance from the viewpoint E is larger than a predetermined threshold, a virtual image object related to the target object is displayed at the predetermined unique position Pa (a position at a distance La from the viewpoint E).

Incidentally, when virtual image objects are displayed in association with target objects (for example, the vehicles C11 to C14) that exist around the vehicle 1, it is desirable to change a distance of each virtual image object according to a distance of a target object in order to reduce discomfort of the occupant of the vehicle 1. However, when distances of the virtual image objects are made variable according to distances of all target objects, a high processing load may be applied.

Therefore, according to the HUD 42 of the second embodiment, when changing a display mode of a virtual image object based on a target object, the HUD controller 425 controls the image generation unit 424 to change a distance from the viewpoint E to the virtual image object according to a distance of the target object when a distance from the viewpoint E to the target object is equal to or smaller than a predetermined threshold, and to keep a distance of the virtual image object constant when a distance from the viewpoint E to the target object is larger than the predetermined threshold. Accordingly, a virtual image object at a distance close to the viewpoint E is changed according to a distance of a target object, so that it is possible to prevent discomfort given to the occupant. On the other hand, since an arrangement of a virtual image object at a distance far from the viewpoint E is constant, a processing load when generating an image of the virtual image object can be suppressed. The farther the object is, the more difficult it is for a human eye to grasp an accurate sense of distance. Therefore, even when the position of the virtual image object at a distance far from the viewpoint E is fixed, discomfort given to the occupant is not great.

In the second embodiment, when the distance from the viewpoint E to the target object is larger than the threshold, a fixed distance La from the viewpoint E to the virtual image object is set to be equal to or larger than the threshold distance L_{D}. When a virtual image object displayed for a target object at a distance far from the viewpoint E is projected closer than a virtual image object displayed for a target object at a distance close to the viewpoint E, discomfort is given to the occupant. Therefore, in the present embodiment, by setting the fixed distance La to be equal to or larger than the threshold distance L_{D}, it is possible to reduce the discomfort given to the occupant.

The threshold P_{D} (the threshold distance L_{D}) may be changeable according to a predetermined condition. For example, the threshold P_{D} (the threshold distance L_{D}) may be increased as illuminance around the vehicle 1 increases. When surroundings of the vehicle 1 are bright, the occupant can clearly visually recognize the surroundings from a long distance. Therefore, it is preferable to increase the threshold as the illuminance increases to reduce discomfort given to the occupant as much as possible. In this way, in the present embodiment, it is possible to determine an appropriate threshold in consideration of a balance between the reduction of the discomfort and the suppression of the processing load.

The threshold P_{D} (the threshold distance L_{D}) may be increased as the traveling speed of the vehicle 1 increases. When a vehicle speed of the vehicle 1 is high, it is necessary to cause the occupant to accurately grasp a target object or a virtual image object at a far distance. Therefore, it is preferable to increase the threshold as the vehicle speed increases. Also in this case, it is possible to determine an appropriate threshold in consideration of the balance between the reduction of the discomfort and the suppression of the processing load.

In the second embodiment, when the distance from the viewpoint E to the target object is larger than the threshold, a size of a virtual image object to be displayed may be changed according to the distance. For example, the distance L12 from the viewpoint E to the preceding vehicle C12 is shorter than the distance L14 from the viewpoint E to the oncoming vehicle C14. Therefore, as shown in Fig. 9, the HUD controller 425 controls the image generation unit 424 to display the virtual image object I2 corresponding to the preceding vehicle C12 larger than the virtual image object I4 corresponding to the oncoming vehicle C14 displayed at the same distance as that of the virtual image object I2. Accordingly, the occupant may feel as if the virtual image object I2 is disposed in front of the virtual image object I4. That is, by making sizes of the virtual image objects I2 and I4 whose distances are constant variable, it is possible to simulatively display the virtual image objects at a distance far from the viewpoint E with perspective.

Also in a case of the HUD 142 including the combiner 143 as shown in Fig. 8, the HUD controller 425 changes a distance from the viewpoint E to a virtual image object according to a distance of a target object when a distance from the viewpoint E to the target object is equal to or smaller than a predetermined threshold, and keeps a distance of the virtual image object constant when the distance from the viewpoint E to the target object is larger than the predetermined threshold. Accordingly, it is possible to prevent the discomfort given to the occupant while suppressing the processing load.

### (Third Embodiment)

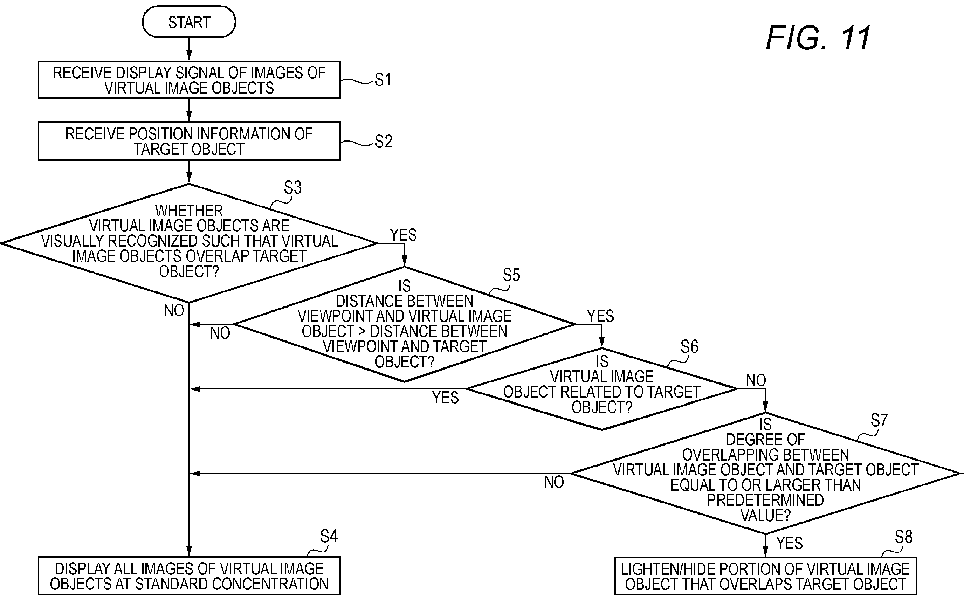

Next, control related to generation of virtual image objects using the HUD 42 according to a third embodiment will be described with reference to Figs. 11 to 13.

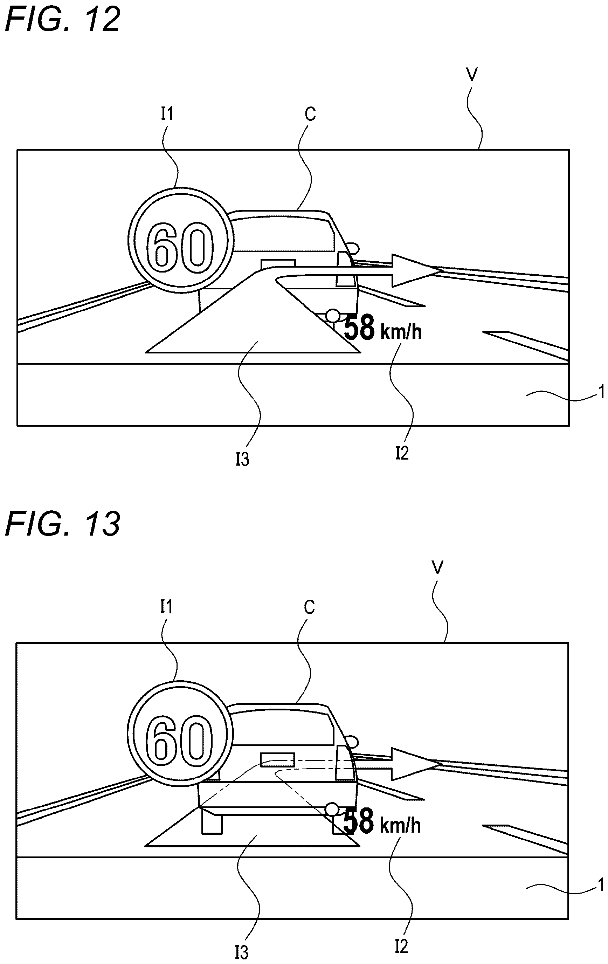

Fig. 11 is a flowchart for illustrating control of the HUD 42 according to the third embodiment. Figs. 12 and 13 are diagrams showing examples of the field-of-view region V of the occupant in a state where virtual image objects I1 to I3 are displayed by the HUD 42 such that the virtual image objects I1 to I3 are superimposed on a real space outside the vehicle 1. A part of the vehicle 1 (a bonnet, or the like) is included in the field-of-view region V shown in Figs. 12 and 13.

As shown in Fig. 11, first, the HUD controller 425 of the HUD 42 receives an object display signal for displaying virtual image objects at predetermined positions in front of the vehicle 1 from the display controller 43 or the vehicle controller 3 (step S1). The object display signal includes position information of the virtual image objects in addition to display modes (shapes, colors, or the like) of the virtual image objects displayed in front of the vehicle. The position information includes a display position of a virtual image object in the front-rear direction of the vehicle 1 as well as a display position of a virtual image object in upper-lower and left-right directions around the vehicle 1. The display position of the virtual image object in the front-rear direction is specified by, for example, a distance from the viewpoint E (see Fig. 2) of the occupant of the vehicle 1 to the virtual image object. The virtual image object may be displayed, for example, at a position 5m to 10m away from the viewpoint E in front of the vehicle 1. In this example, as the virtual image objects, as shown in Fig. 12 and the like, for example, a legal speed object I1 indicating information on a legal speed of a road on which the vehicle 1 travels, a vehicle speed object I2 indicating information on a current traveling speed of the vehicle 1, and a direction indication object I3 indicating an advancing direction of the vehicle 1 may be displayed in front of the vehicle 1. The HUD controller 425 acquires position information (including distances from the viewpoint E to the virtual image objects) of the virtual image objects I1 to I3 from the display controller 43 or the vehicle controller 3.

Next, the HUD controller 425 receives position information of an object (hereinafter, referred to as target object) such as a vehicle or a pedestrian that exists around the vehicle 1 from the display controller 43 or the vehicle controller 3 (step S2). The position information of the target object includes a position of a target object in the front-rear direction of the vehicle 1 as well as a position of a target object in the upper-lower and left-right directions around the vehicle 1. The position of the target object in the front-rear direction is specified by, for example, a distance from the viewpoint E of the occupant of the vehicle 1 to the target object. A position and a distance of the target object are calculated from, for example, data indicating a surrounding environment of the vehicle acquired by the radars 7 or the external cameras 6A. In a case where a distance between the radars 7 or the external cameras 6A and the viewpoint E is far, for example, when the radars 7 are mounted inside the headlamps 20 of the vehicle 1, a distance from the radars 7 or the like to the viewpoint E is added to a distance from the radars 7 or the like to the target object to be able to calculate a distance from the viewpoint E to the target object. In this example, as shown in Fig. 12 and the like, it is assumed that a preceding vehicle C exists in front of the vehicle 1 as the target object. The HUD controller 425 acquires position information of the preceding vehicle C (including a distance from the viewpoint E to the preceding vehicle C) from the display controller 43 or the vehicle controller 3.

Next, the HUD controller 425 determines whether the virtual image objects are visually recognized by the occupant of the vehicle 1 such that the virtual image objects overlap the target object based on the position information of the virtual image objects received in step S 1 and the position information of the target object received in step S2 (step S3). Specifically, the HUD controller 425 determines whether at least a part of the virtual image objects I1 to I3 exists in a region that connects the viewpoint E and the preceding vehicle C, based on, for example, the position information of the virtual image objects I1 to I3 and the position information of the preceding vehicle C.

In step S3, when it is determined that the virtual image objects are visually recognized by the occupant without overlapping the target object (No in step S3), the HUD controller 425 generates all the virtual image objects at a standard concentration (standard luminance) (step S4). Specifically, when it is determined that the virtual image objects I1 to I3 do not exist in the region that connects the viewpoint E and the preceding vehicle C, the HUD controller 425 generates all the virtual image objects I1 to I3 at the standard concentration.

On the other hand, in step S3, when it is determined that the virtual image objects are visually recognized by the occupant such that the virtual image objects overlap the target object (Yes in step S3), the HUD controller 425 determines whether a distance between the viewpoint E of the occupant and each of the virtual image objects is larger than a distance between the viewpoint E and the target object (step S5). That is, when it is determined that at least a part of the virtual image objects I1 to I3 exists between the viewpoint E and the preceding vehicle C, the HUD controller 425 determines whether a distance between the viewpoint E of the occupant and each of the virtual image objects I1 to I3 shown in Fig. 12 is larger than a distance between the viewpoint E and the preceding vehicle C that is the target object. That is, the HUD controller 425 determines whether the virtual image objects I1 to I3 are positioned farther than the preceding vehicle C visually recognized by the occupant while overlapping the virtual image objects I1 to I3.

In step S5, when it is determined that the distances between the viewpoint E of the occupant and the virtual image objects are equal to or smaller than the distance between the viewpoint E and the target object (No in step S5), the HUD controller 425 generates all the virtual image objects at the standard concentration (step S4). For example, when the distance between the viewpoint E and each of the virtual image objects I1 to I3 is equal to or smaller than the distance between the viewpoint E and the preceding vehicle C, that is, when each of the virtual image objects I1 to I3 is positioned closer to the viewpoint E than the preceding vehicle C, the HUD controller 425 generates all the virtual image objects I1 to I3 at the standard concentration as shown in Fig. 12.

On the other hand, in step S5, when it is determined that a distance between the viewpoint E of the occupant and a virtual image object is larger than the distance between the viewpoint E and the target object (Yes in step S5), the HUD controller 425 determines whether the virtual image object is a virtual image object related to the target object (step S6). That is, when each of the virtual image objects I1 to I3 is positioned farther from the viewpoint E than the preceding vehicle C, the HUD controller 425 determines whether each of the virtual image objects I1 to I3 is a virtual image object related to the preceding vehicle C.

In step S6, when it is determined that the virtual image object is the virtual image object related to the target object (Yes in step S6), the HUD controller 425 generates the entire virtual image object at the standard concentration (step S4). For example, when any one of a plurality of virtual image objects I1 to I3 is the virtual image object related to the preceding vehicle C, the HUD controller 425 generates the entire virtual image object at the standard concentration.

On the other hand, in step S6, when it is determined that the virtual image object is not the virtual image object related to the target object (No in step S6), the HUD controller 425 determines whether a degree of overlapping (an overlapping area) between the virtual image object and the target object is equal to or larger than a predetermined value (step S7). That is, when it is determined that each of the virtual image objects I1 to I3 is not the virtual image object related to the preceding vehicle C, the HUD controller 425 determines whether a degree of overlapping between each of the virtual image objects I1 to I3 and the preceding vehicle C in the upper-lower and left-right directions is equal to or larger than a predetermined value. In this example, the virtual image objects (the legal speed object I1, the vehicle speed object I2, and the direction indication object I3) are objects related to traveling of the vehicle 1 and are not objects related to the preceding vehicle C. Therefore, in step S7, the HUD controller 425 determines whether the degree of overlapping with the preceding vehicle C is equal to or larger than a predetermined value for any one of the virtual image objects I1 to I3.

In step S7, when it is determined that the degree of overlapping between the virtual image object and the target object is not equal to or larger than the predetermined value (No in step S7), the HUD controller 425 generates the entire virtual image object at the standard concentration (step S4). In this example, it is assumed that, among the virtual image objects I1 to I3, the legal speed object I1 and the vehicle speed object I2 have a degree of overlapping with the preceding vehicle C smaller than the predetermined value. In this case, as shown in Fig. 13, the legal speed object I1 and the vehicle speed object I2 whose degree of overlapping with the preceding vehicle C is smaller than the predetermined value are all generated at the standard concentration.

On the other hand, when it is determined in step S7 that the degree of overlapping between the virtual image object and the target object is equal to or larger than the predetermined value (Yes in step S7), the HUD controller 425 displays a portion of the virtual image object that overlaps the target object at a concentration lower than the standard concentration (step S8). In this example, it is assumed that, among the virtual image objects I1 to I3, the direction indication object I3 has the degree of overlapping with the preceding vehicle C equal to or larger than the predetermined value. In this case, as shown in Fig. 13, in the direction indication object I3 whose degree of overlapping with the preceding vehicle C is equal to or larger than the predetermined value, a portion that overlaps the preceding vehicle C is displayed at a concentration lower than the standard concentration, and a portion that does not overlap the preceding vehicle C is generated at the standard concentration. A boundary between the direction indication object I3 and the preceding vehicle C may be displayed in a blurred manner.

When there is no target object around the vehicle 1, the HUD controller 425 may generate all the virtual image objects at the standard concentration without performing the processing of step S3 and the subsequent steps.

Incidentally, in a state where a target object (the preceding vehicle C, or the like) that exists around the vehicle 1 is positioned closer than a virtual image object (the virtual image objects I1 to I3, or the like), when the virtual image object is visually recognized overlapping the target object, since the virtual image object appears to be embedded in the target object, discomfort is given to the occupant. Further, when the virtual image object is visually recognized overlapping the target object, it may be difficult for the occupant to recognize which of the target object and the virtual image object is closer.

Therefore, according to the HUD 42 of the present embodiment, when the HUD controller 425 determines that a virtual image object is visually recognized by the occupant such that the virtual image object overlaps the target object and determines that a distance between the virtual image object and the occupant is larger than a distance between the target object and the occupant based on information on a distance between the target object and the occupant, the HUD controller 425 controls the image generation unit 424 such that display of an image for generating the virtual image object is weakened for at least a region that overlaps the target object in the virtual image object. According to this configuration, it is possible to cause the occupant to recognize the weakened region that overlaps the target object (for example, the preceding vehicle C) in the virtual image object (for example, the virtual image object I3). Accordingly, the occupant can easily recognize that the preceding vehicle C is positioned nearby, and the discomfort given to the occupant can be reduced.

Further, when an image of a virtual image object generated by the image generation unit 424 is related to the target object, the HUD controller 425 controls the image generation unit 424 such that display of the image is not weakened but has the standard concentration for a region where the virtual image object and the target object overlap each other. According to this configuration, when a virtual image object is related to the target object, even when the virtual image object is visually recognized overlapping the target object, the virtual image object is visually recognized at the standard concentration without being weakened, so that the occupant can positively recognize the virtual image object.

When the plurality of virtual image objects overlap the target object, the HUD controller 425 may control the image generation unit 424 such that at least one of a plurality of images that form the plurality of virtual image objects becomes weakened. For example, as described based on the flowchart of Fig. 11, when the plurality of virtual image objects I1 to I3 overlap the preceding vehicle C, the HUD controller 425 may control the image generation unit 424 such that only an image that forms the direction indication object I3 among the plurality of virtual image objects I1 to I3 becomes weakened. According to this configuration, when the plurality of virtual image objects overlap the target object, at least one weakened virtual image object is visually recognized, so that it is possible to reduce the discomfort given to the occupant.

The HUD controller 425 may determine at least one virtual image object whose image is lightened among the plurality of virtual image objects I1 to I3 based on the degree of overlapping of each of the virtual image objects I1 to I3 with the preceding vehicle C. According to this configuration, the weakened virtual image object to be visually recognized can be appropriately determined according to a situation.

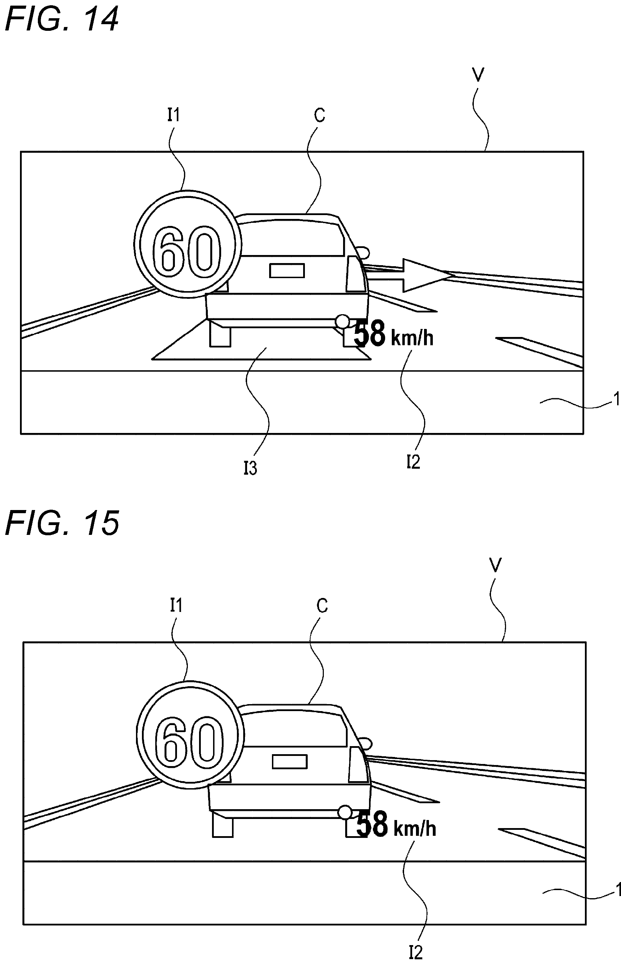

In the above embodiment, when only a part of the virtual image object overlaps the target object, the HUD controller 425 controls the image generation unit 424 to display the region of the image corresponding to the overlapping portion at the concentration lower than the standard concentration (the standard luminance), but the present invention is not limited to this example. For example, the HUD controller 425 may control the image generation unit 424 such that the image of the virtual image object corresponding to the portion that overlaps the target object is hidden. "Performing display at the luminance lower than the standard luminance" refers to reducing luminance of an image and includes reducing the luminance to zero. Specifically, as shown in Fig. 14, the HUD controller 425 may hide a portion of the direction indication object I3 that overlaps the preceding vehicle C.

Even when only a part of the virtual image object overlaps the target object, the HUD controller 425 may control the image generation unit 424 such that the entire image for generating the virtual image object is weakened or the entire image of the virtual image object is hidden. Specifically, as shown in Fig. 15, the HUD controller 425 may hide (or lighten) the entire direction indication object I3 that overlaps the preceding vehicle C. According to this configuration, even when only a part of the virtual image object overlaps the target object, it is easy for the occupant to visually recognize the target object by recognizing the weakened entire virtual image object or hiding the entire virtual image object.

In the above embodiment, the HUD controller 425 determines at least one virtual image object (for example, the direction indication object I3) whose image is weakened among the plurality of virtual image objects I1 to I3 based on the degree of overlapping of each of the virtual image objects I1 to I3 with the preceding vehicle C, but the present invention is not limited to this example. The HUD controller 425 may determine at least one virtual image object whose image is weakened among the plurality of virtual image objects based on the importance of each of the virtual image objects. In this example, it is assumed that the legal speed object I1 and the vehicle speed object I2 among the plurality of virtual image objects I1 to I3 have importance higher than that of the direction indication object I3. In that case, the HUD controller 425 can determine the direction indication object I3 having low importance as the virtual image object whose image is to be weakened. Also with this configuration, the weakened virtual image object to be visually recognized can be appropriately determined according to a situation.

Also in a case of the HUD 142 including the combiner 143 as shown in Fig. 8, based on a predetermined condition, display of an image for generating a virtual image object is weakened for at least a region that overlaps the target object in the virtual image object, so that it is possible to reduce the discomfort given to the occupant.

### (Fourth Embodiment)

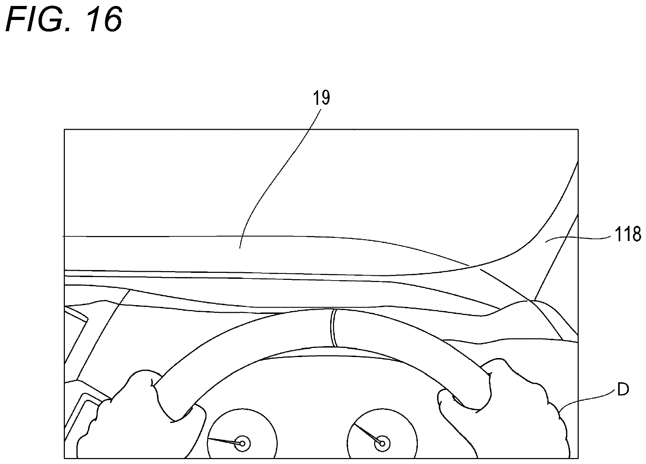

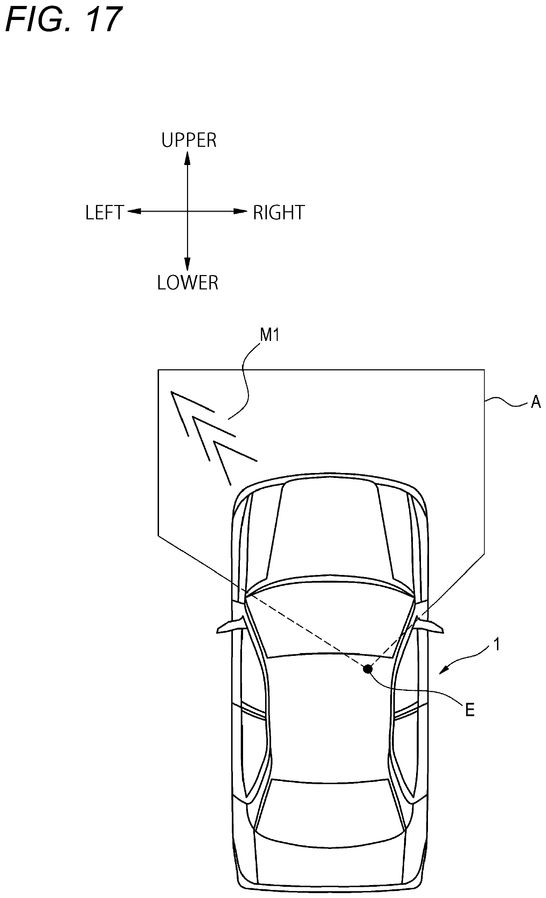

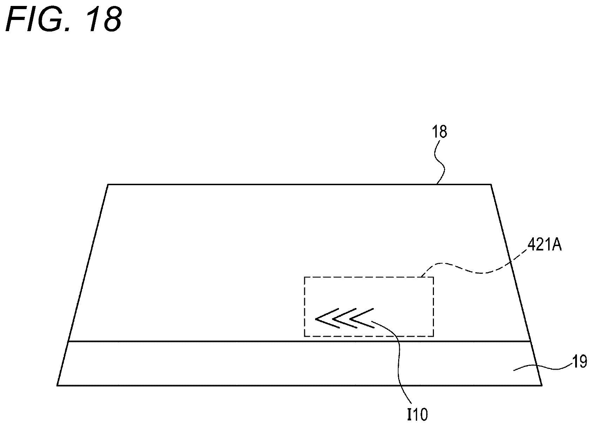

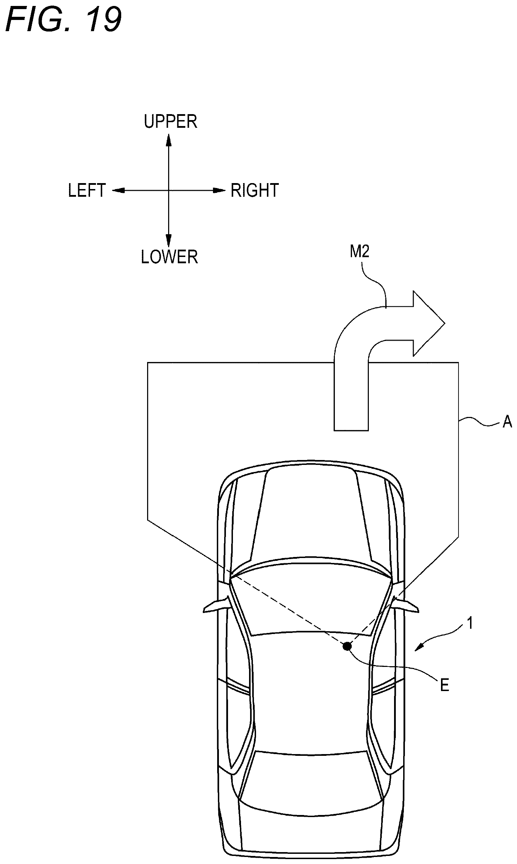

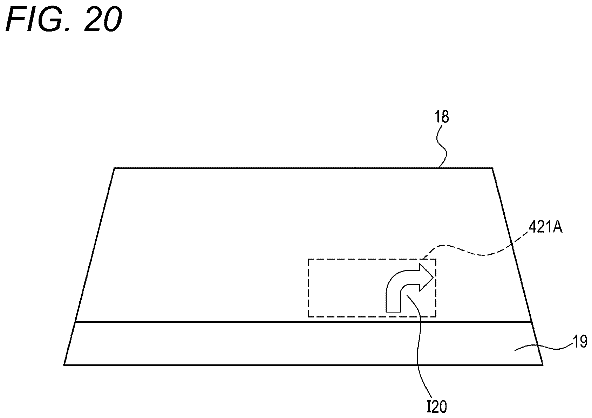

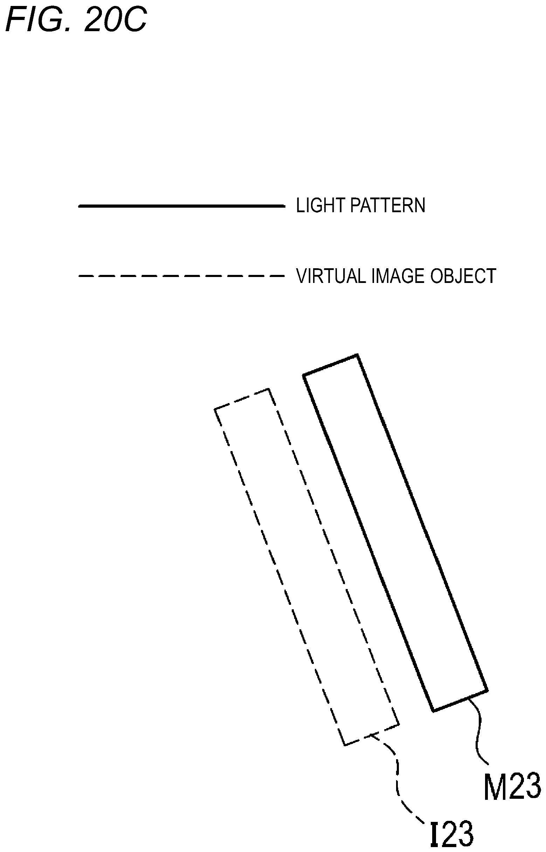

Next, an example of operations of the display system 4 according to a fourth embodiment will be described below with reference to Figs. 16 to 20. Fig. 16 is a diagram showing an example of a front side of the vehicle as viewed from the driver. Fig. 17 is a schematic diagram of a light pattern irradiating a blind spot region in front of the vehicle as viewed from above the vehicle. Fig. 18 is a diagram showing an example of the windshield on which an image corresponding to the light pattern of Fig. 17 is displayed. Fig. 19 is a schematic diagram of a light pattern partially irradiating the blind spot region in front of the vehicle as viewed from above the vehicle. Fig. 20 is a diagram showing an example of the windshield on which an image corresponding to the light pattern of Fig. 19 is displayed. A driver is an example of the occupant of the vehicle 1.

As shown in Fig. 16, in front of a driver D, for example, there are the bonnet 19 and a pillar 118 of the windshield 18 that are components of the vehicle 1. Therefore, as shown in Fig. 17, a region that cannot be visually recognized by the driver (hereinafter, referred to as blind spot region A) is formed on a road surface in front of the vehicle 1. When the road surface drawing apparatus 45 draws a light pattern representing predetermined information (for example, information on the advancing direction of the vehicle 1) on a road surface for a target object (for example, another vehicle, a pedestrian, or the like) that exists near the vehicle 1, at least a part of the light pattern may irradiate the blind spot region A that cannot be visually recognized by the driver of the vehicle 1.

When at least a part of the light pattern irradiates the blind spot region A by the road surface drawing apparatus 45, the display system 4 of the present embodiment causes the HUD 42 to display an image (a virtual image object) corresponding to the light pattern.

First, the display controller 43 determines a light pattern to be emitted by the road surface drawing apparatus 45 based on the traveling state information, the surrounding environment information, and the like transmitted from the vehicle controller 3. Then, the display controller 43 transmits a signal related to the determined light pattern to the road surface drawing apparatus 45. The road surface drawing apparatus 45 draws the predetermined light pattern on the road surface based on the signal transmitted from the display controller 43.

The display controller 43 determines whether at least a part of the predetermined light pattern irradiates the blind spot region A by the road surface drawing apparatus 45. For example, an emission angle (hereinafter, referred to as emission angle of light corresponding to the blind spot region A) of the road surface drawing apparatus 45 that emits the light irradiating the blind spot region A is stored in advance in the memory of the display controller 43. The display controller 43 determines whether an emission angle of the predetermined light pattern by the road surface drawing apparatus 45 is included in a range of the emission angle of the light corresponding to the blind spot region A stored in the memory. When the emission angle of the predetermined light pattern by the road surface drawing apparatus 45 is included in the range of the emission angle of the light corresponding to the blind spot region A stored in the memory, the display controller 43 determines that at least a part of the predetermined light pattern irradiates the blind spot region A by the road surface drawing apparatus 45. The emission angle of the light corresponding to the blind spot region A is calculated, for example, as follows. First, the blind spot region A is estimated based on positions of the components (for example, the bonnet 19 and the pillar 118 of the windshield 18) positioned in front of the driver of the vehicle 1 and a position of eyes of the driver (for example, a standard position of the eyes of the driver). Then, based on a position of the road surface drawing apparatus 45 of the vehicle 1, the emission angle of the road surface drawing apparatus 45 that emits light irradiating the estimated blind spot region A is calculated.

Next, when determining that at least a part of the predetermined light pattern irradiates the blind spot region A by the road surface drawing apparatus 45, the display controller 43 controls the HUD 42 to generate a predetermined image corresponding to the predetermined light pattern. The display controller 43 transmits predetermined image data corresponding to the predetermined light pattern emitted by the road surface drawing apparatus 45 to the HUD controller 425 of the HUD 42. The HUD controller 425 controls the image generation unit 424 to generate a predetermined image corresponding to the predetermined light pattern emitted by the road surface drawing apparatus 45 based on the predetermined image data transmitted from the display controller 43. The image generated by the image generation unit 424 is projected onto the windshield 18 via the lens 426, the screen 427, and the concave mirror 428. The occupant who visually recognizes the image projected onto the windshield 18 recognizes that a virtual image object I is displayed in a space outside the vehicle.

For example, Fig. 17 shows an example in which an entire light pattern M1 indicating an advancing direction is drawn in the blind spot region A. The light pattern M1 indicates that the stopped vehicle 1 is scheduled to start moving diagonally forward to a left side. When determining that the entire light pattern M1 irradiates the blind spot region A, for example, as shown in Fig. 18, the display controller 43 causes an image for causing a virtual image object I10 corresponding to the light pattern M1 of Fig. 17 to be visually recognized to be displayed in a HUD display range 421A of the windshield 18.

Fig. 19 shows an example in which a part of a light pattern M2 indicating an advancing direction is drawn in the blind spot region A. The light pattern M2 indicates that the vehicle 1 is scheduled to turn right. When determining that only a part of the light pattern irradiates the blind spot region A, for example, as shown in Fig. 20, the display controller 43 causes an image for causing a virtual image object I20 corresponding to the light pattern M2 of Fig. 19 to be visually recognized to be displayed in the HUD display range 421A of the windshield 18. The virtual image object I20 corresponds to the entire light pattern M2, not only a portion irradiating the blind spot region A of the light pattern M2.

In the present embodiment, the display controller 43 determines whether at least a part of the light pattern irradiates the blind spot region A, but the present invention is not limited thereto. For example, the vehicle controller 3 may determine a light pattern to be emitted by the road surface drawing apparatus 45, determine whether at least a part of the light pattern irradiates the blind spot region A, and transmit a signal indicating the determination result to the display controller 43.

In the present embodiment, the display controller 43 stores in advance the range of the emission angle of the light by the road surface drawing apparatus 45 corresponding to the blind spot region A in the memory, and determines whether at least a part of the light pattern irradiates the blind spot region Abased on the range, but the present invention is not limited thereto. For example, an irradiation range of light on a road surface by the road surface drawing apparatus 45 corresponding to the blind spot region A may be calculated in advance and stored in the memory, and the determination may be performed based on the calculated irradiation range. Further, by detecting the light pattern actually drawn on the road surface and the position of the eyes of the driver in real time, based on these pieces of detection data, the blind spot region A may be specified and it may be determined whether at least a part of the light pattern irradiates the blind spot region A.

In the present embodiment, the display controller 43 determines that at least a part of the light pattern irradiates the blind spot region A regardless of a start of road surface drawing by the road surface drawing apparatus 45, but the present invention is not limited thereto. For example, the display controller 43 may perform the determination after the road surface drawing by the road surface drawing apparatus 45 is started. Further, after the road surface drawing by the road surface drawing apparatus 45 is started, an irradiation range on the road surface of the light pattern actually drawn on the road surface by the external cameras 6A may be detected. The display controller 43 may perform the determination based on irradiation range data on the road surface of the light pattern received from the external cameras 6A.

In the present embodiment, the blind spot region A is described as a region that cannot be visually recognized by the driver on the road surface in front of the vehicle 1, but the present invention is not limited thereto. For example, the blind spot region A may include a region that cannot be visually recognized by the driver on the road surface on a lateral side or a rear side of the vehicle due to a component of the vehicle 1 positioned on a lateral side or a rear side of the driver D. The display system 4 may cause the HUD 42 to display an image (a virtual image object) corresponding to the light pattern when at least a part of the light pattern is emitted by the road surface drawing apparatus 45 on the blind spot region A on the road surface on the lateral side or the rear side of the vehicle.

In this way, in the present embodiment, the HUD controller 425 controls the image generation unit 424 to generate a predetermined image corresponding to a light pattern based on information indicating that at least a part of the light pattern irradiates the blind spot region A, which cannot be visually recognized by the driver of the vehicle 1, by the road surface drawing apparatus 45 configured to emit the light pattern toward the road surface outside the vehicle 1. Further, the display controller 43 controls the HUD 42 to generate the predetermined image corresponding to the light pattern based on the information indicating that at least a part of the light pattern irradiates the blind spot region A, which cannot be visually recognized by the driver of the vehicle 1, by the road surface drawing apparatus 45. Therefore, when the light pattern emitted by the road surface drawing apparatus 45 cannot be visually recognized by the driver of the vehicle, the predetermined image corresponding to the light pattern is displayed on the HUD 42, so that the driver of the vehicle can accurately recognize the light pattern irradiating an outside of the vehicle. That is, it is possible to provide the HUD 42 with improved usability.

The HUD controller 425 controls the image generation unit 424 to generate a predetermined image corresponding to an entire light pattern based on information indicating that only a part of the light pattern irradiates the blind spot region A. Further, the display controller 43 controls the HUD 42 to generate the predetermined image corresponding to the entire light pattern based on the information including information indicating that only a part of the light pattern irradiates the blind spot region A. Therefore, even when only a part of the light pattern cannot be visually recognized, the image corresponding to the entire light pattern is displayed on the HUD 42, so that the driver of the vehicle 1 can more accurately recognize the light pattern irradiating the outside of the vehicle.

The emission angle of light by the road surface drawing apparatus 45 or the irradiation range of light on the road surface by the road surface drawing apparatus 45 that corresponds to the blind spot region A is defined. Therefore, if the emission angle of light by the road surface drawing apparatus 45 or the irradiation range of light on the road surface by the road surface drawing apparatus 45 that corresponds to the blind spot region A is defined in advance, it is not necessary to detect the light pattern actually drawn on the road surface to determine whether the light pattern can be visually recognized by the driver.

In the third embodiment, the display system 4 causes the HUD 42 to display a virtual image object corresponding to a light pattern when the light pattern of the road surface drawing apparatus 45 irradiates the blind spot region A, but the present invention is not limited thereto. For example, the display system 4 may cause the HUD 42 to display a virtual image object corresponding to a light pattern that is emitted or to be emitted by the road surface drawing apparatus 45 based on weather information. The vehicle controller 3 acquires the weather information based on detection data from the external cameras 6A (for example, raindrop sensors), or based on own vehicle position information from the GPS 9 and weather data from the wireless communication unit 10. The vehicle controller 3 may acquire the weather information by performing a predetermined image processing on image data indicating a surrounding environment of the vehicle from the external cameras 6A. The display controller 43 causes the HUD 42 to display the virtual image object corresponding to the light pattern that is emitted or to be emitted by the road surface drawing apparatus 45 based on the weather information transmitted from the vehicle controller 3. For example, when the weather information transmitted from the vehicle controller 3 means "sunny", the display controller 43 does not perform virtual image object display of the HUD 42 corresponding to the light pattern of the road surface drawing apparatus 45. On the other hand, when the weather information transmitted from the vehicle controller 3 means "rainy", the display controller 43 causes the HUD 42 to display a virtual image object corresponding to a light pattern to be emitted by the road surface drawing apparatus 45, and does not perform light pattern display by the road surface drawing apparatus 45. Further, when a content of the weather information is changed from "sunny" to "rainy" while the light pattern is being emitted by the road surface drawing apparatus 45, the display controller 43 may cause the HUD 42 to display a virtual image object corresponding to the light pattern emitted by the road surface drawing apparatus 45. In this way, on a sunny day, by directly drawing the light pattern on the road surface, it is possible to provide the driver with predetermined information (for example, a distance from a preceding vehicle, navigation information, and the like) without moving a line of sight of the driver. On the other hand, since it may be difficult to recognize a pattern drawn on the road surface on a rainy day, by displaying the pattern as a virtual image object on the HDU 42, similar information can be provided to the driver by the HUD 42.

### (Fifth Embodiment)

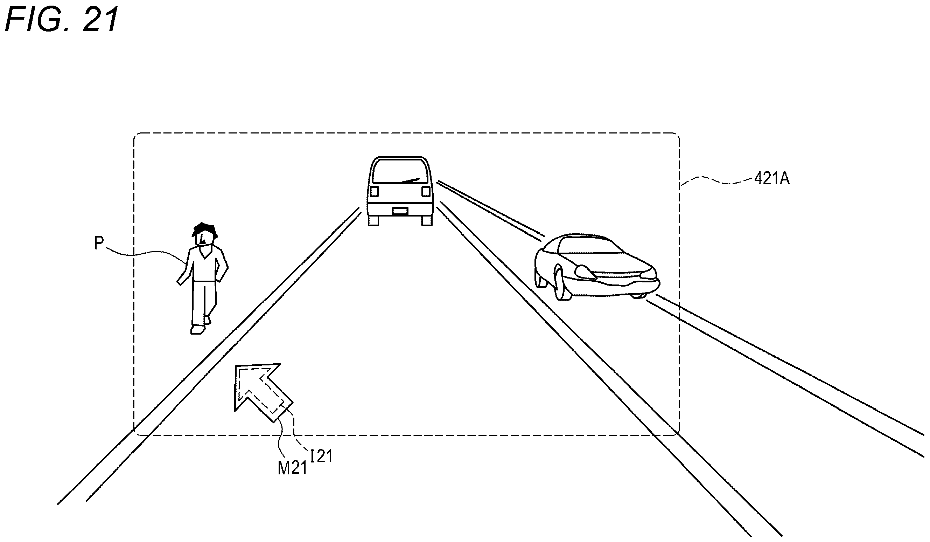

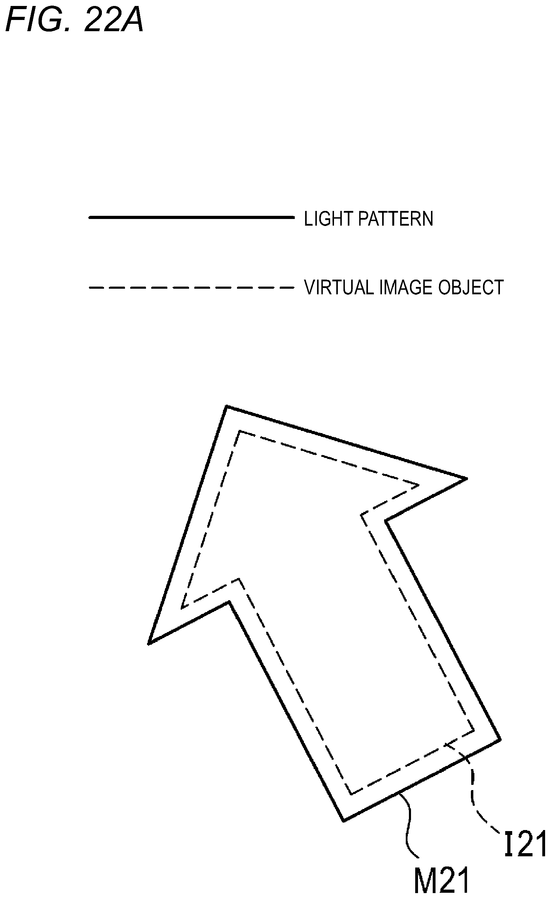

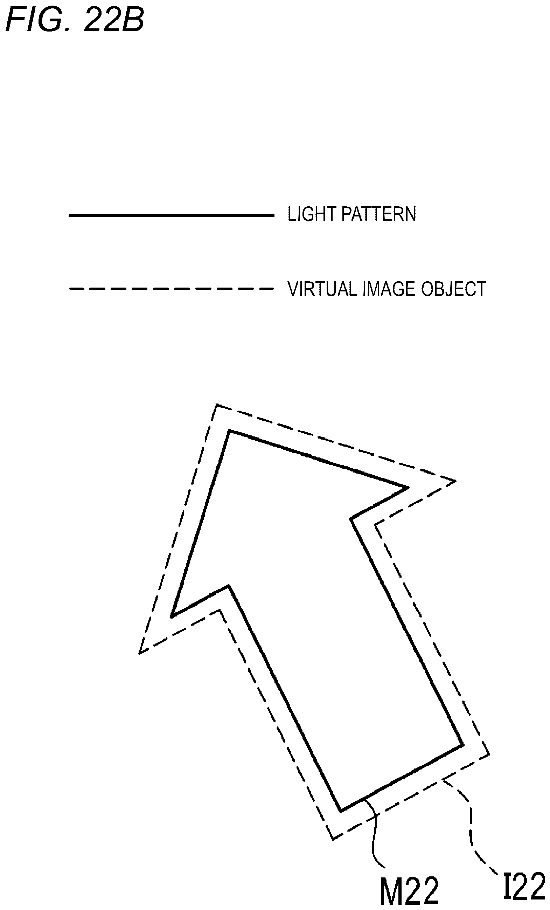

Next, an example of operations of the display system 4 according to a fifth embodiment will be described below with reference to Fig. 21 and Figs. 22A to 22D. Fig. 21 is a diagram showing an example of the windshield on which a light pattern M21 and a virtual image object I21 corresponding to each other are displayed in an overlapping manner. Fig. 22A is a diagram showing an example of the light pattern M21 and the virtual image object I21 of Fig. 21. Figs. 22B to 22D are diagrams showing other examples of the light pattern and the virtual image object corresponding to each other, which are displayed on the windshield.

The display system 4 of the present embodiment controls operations of at least one of the HUD 42 and the road surface drawing apparatus 45 such that a predetermined image displayed on the HUD 42 and a light pattern emitted by the road surface drawing apparatus 45 correspond to each other and the predetermined image and the light pattern have different colors.

When determining that there is information (for example, information on an advancing direction of the vehicle 1, pedestrian information, another vehicle information, and the like) to be displayed on both the road surface drawing apparatus 45 and the HUD 42 based on traveling state information, surrounding environment information, and the like transmitted from the vehicle controller 3, the display controller 43 determines a light pattern (for example, a shape, a size, a color, an emission position on a road surface, and the like) to be emitted by the road surface drawing apparatus 45 and a predetermined image (for example, a shape, a size, a color, a display position on the windshield 18, and the like) to be displayed by the HUD 42 that correspond to the information.

At this time, the display controller 43 sets the colors of the light pattern and the predetermined image such that the light pattern and the predetermined image, which mean the same information and correspond to each other, are displayed in different colors. In the following description, the light pattern and the predetermined image that mean the same information and correspond to each other may be simply referred to as a light pattern and a predetermined image that correspond to each other. For example, road surface drawing may be limited to white display in order to prevent erroneous recognition by a driver, a pedestrian, or the like outside the vehicle. Therefore, the display controller 43 sets the light pattern to white and sets the predetermined image corresponding to the light pattern to a color different from white. The color of the predetermined image may be set according to information to be displayed. For example, in a case of information indicating a distance between the own vehicle 1 and a preceding vehicle, the predetermined image may be set to be displayed in blue, and in a case of information indicating the advancing direction of the own vehicle 1, the predetermined image may be set to be displayed in green.

The display controller 43 sets a display position of the predetermined image on the windshield 18 such that the driver can visually recognize the virtual image object formed by the predetermined image at a position related to the corresponding light pattern. For example, a display position of the predetermined image may be set such that the virtual image object can be visually recognized overlapping the corresponding light pattern. Further, the display position of the predetermined image may be set such that a part of the virtual image object can be visually recognized overlapping the corresponding light pattern. Further, the display position of the predetermined image may be set such that the virtual image object can be visually recognized adjacent to the corresponding light pattern.

For example, when determining that information indicating that a pedestrian exists on a sidewalk on a left side is displayed on both the road surface drawing apparatus 45 and the HUD 42, the display controller 43 sets shapes of the light pattern of the road surface drawing apparatus 45 and the predetermined image of the HUD 42 to be the same (for example, shapes of an arrow). Further, the display controller 43 sets a color of the light pattern to white and sets a color of the predetermined image to a different color. Further, the display controller 43 sets the display position of the predetermined image such that the virtual image object formed by the predetermined image is visually recognized overlapping the light pattern. In this case, as shown in Fig. 21, within the HUD display range 421A of the windshield 18, the driver can visually recognize the virtual image object I21 having the shape of the arrow formed by the predetermined image in a state of overlapping the light pattern M21 that has the shape of the arrow and is drawn on the corresponding road surface. Therefore, the driver can check the information of the pedestrian P by the light pattern of the road surface drawing apparatus 45 and the virtual image object of the HUD 42. Further, since the light pattern and the predetermined image are visually recognized in different colors, the driver can visually recognize the light pattern M21 and the virtual image object I21 more clearly.

Fig. 22A illustrates only the light pattern M21 and the virtual image object I21 of Fig. 21. As shown in Fig. 22A, the display controller 43 controls the road surface drawing apparatus 45 and the HUD 42 such that the virtual image object I21 having the same shape as that of the light pattern M21 and a small size can be visually recognized in a state of overlapping the light pattern M21. In the light pattern M21 and the virtual image object I21, an outline of the arrow and the entire outline are displayed in a predetermined color, but the present invention is not limited thereto. For example, only the outline of the arrow may be displayed in a predetermined color.

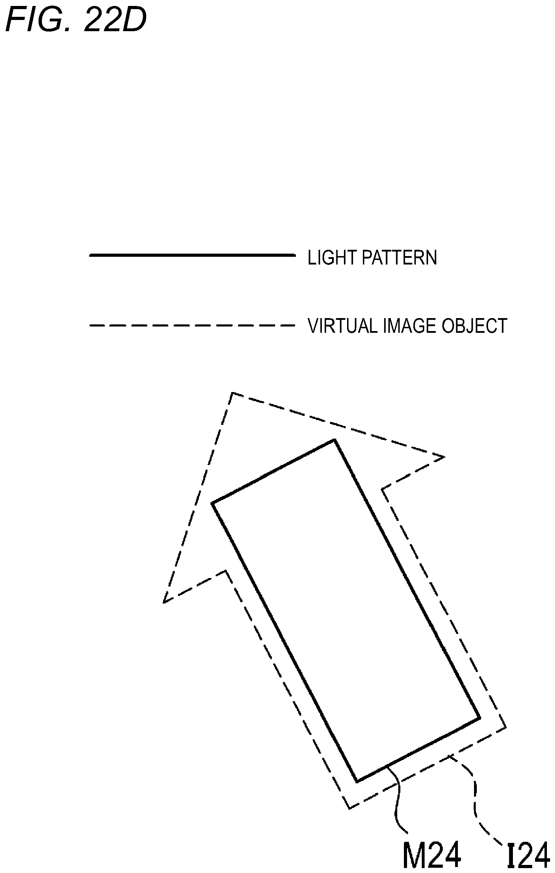

The shapes and the like of the light pattern and the virtual image object that correspond to each other are not limited to the example of Fig. 22A. For example, as shown in Fig. 22B, the HUD 42 may be displayed such that a size of a virtual image object I22 can be visually recognized larger than a size of a light pattern M22. The virtual image object I22 may only display an outline of an arrow. Further, as shown in Fig. 22C, shapes and sizes of a light pattern M23 and a virtual image object I23 may be the same, and the HUD 42 may be displayed such that the virtual image object I23 can be visually recognized adjacent to the light pattern M23. The virtual image object I23 may only display a bar-shaped outline. Further, as shown in Fig. 22D, the HUD 42 may be displayed such that a virtual image object I24 having a shape different from that of a light pattern M24 and a large size can be visually recognized overlapping the light pattern. The virtual image object I24 may only display an outline of an arrow. In Figs. 22B to 22D, the light pattern and the virtual image object are displayed in different colors.

In the present embodiment, the display controller 43 determines the color of the light pattern emitted by road surface drawing and the color of the predetermined image displayed on the HUD, but the present invention is not limited thereto. For example, the HUD controller 425 of the HUD 42 may receive a signal related to color information of a light pattern to be emitted from the road surface drawing apparatus 45, and may control the image generation unit 424 to generate an image in a color different from the color of the light pattern. Further, the external cameras 6A may acquire color information data of a light pattern actually emitted by the road surface drawing apparatus 45. The HUD controller 425 of the HUD 42 may control the image generation unit 424 to generate an image in a color different from the color of the light pattern based on the color information data of the light pattern transmitted from the external cameras 6A. Further, the light source drive circuit of the road surface drawing apparatus 45 may receive a signal related to color information of an image displayed on the HUD 42 from the HUD 42 and control the light source unit to draw a light pattern in a color different from the color of the image.

In this way, in the present embodiment, the HUD controller 425 controls the image generation unit 424 to generate a predetermined image corresponding to a light pattern in a color different from a color of the light pattern based on color information of the light pattern emitted by the road surface drawing apparatus 45. Further, the display controller 43 controls operations of at least one of the HUD 42 and the road surface drawing apparatus 45 such that the predetermined image displayed on the HUD 42 and the light pattern emitted by the road surface drawing apparatus 45 correspond to each other and the predetermined image and the light pattern have different colors. The predetermined image corresponding to the light pattern drawn on the road surface is displayed, so that the driver of the vehicle 1 easily recognizes the displayed light pattern and image. Further, since the light pattern and the predetermined image are visually recognized in different colors, visibility when the driver visually recognizes the light pattern and the predetermined image is good.

When the color information of the light pattern is information indicating white, the HUD controller 425 controls the image generation unit 424 to generate a predetermined image in a color different from white. Further, when the color of the light pattern is white, the display controller 43 controls the HUD 42 to generate a predetermined image in a color different from white. The road surface drawing may be limited to white display in order to prevent erroneous recognition by a driver, a pedestrian, or the like outside the vehicle. Even in such a case, according to the above configuration, since the predetermined image is displayed in a color different from white, visibility when the driver visually recognizes the image is further improved.

### (Sixth Embodiment)

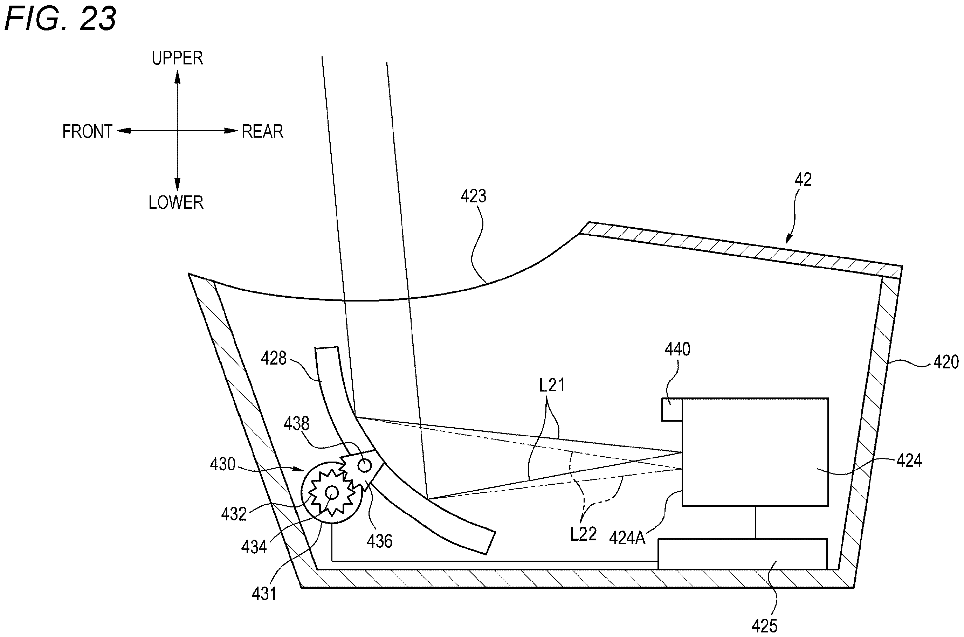

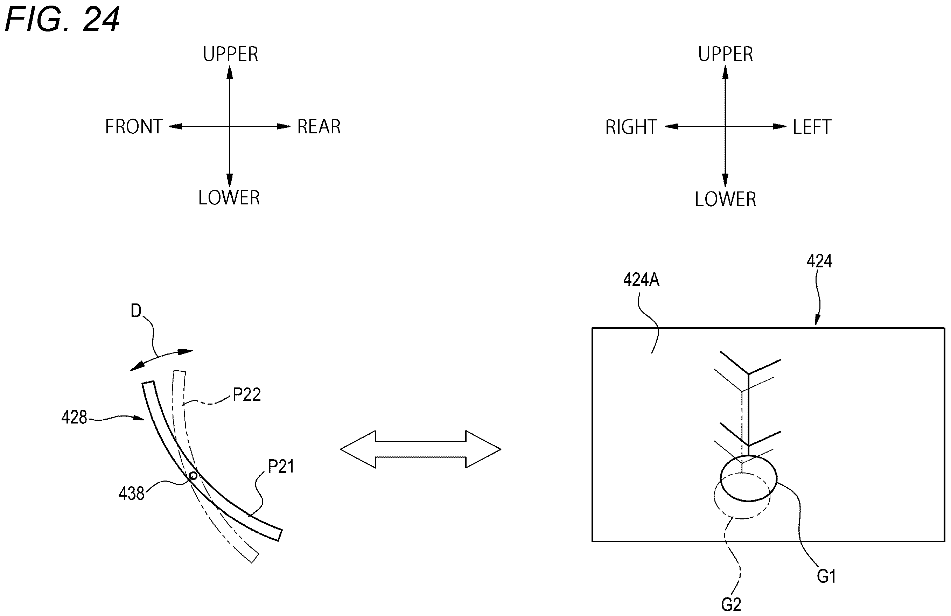

Next, a configuration of a head-up display according to a sixth embodiment will be described with reference to Figs. 23 and 24.

Fig. 23 is a schematic diagram of the HUD main body portion 420 that constitutes the HUD 42 according to the present embodiment. In Fig. 23, illustration of the lens 426 and the screen 427 mounted on the HUD main body portion 420 are omitted. Fig. 24 is a schematic diagram for illustrating a relationship between a swing of a direction of the concave mirror 428 and an emission position of light emitted from the image generation unit 424.

As shown in Fig. 23, the concave mirror 428 according to the present embodiment includes a drive unit 430 for swinging the concave mirror 428. The drive unit 430 is configured with a motor 431, a circular gear 432 attached to the motor 431, and a fan-shaped gear 436 engaged with the circular gear 432. The motor 431 can rotate the circular gear 432 around a shaft 434 that extends in a left-right direction based on a control signal received from the HUD controller 425. The fan-shaped gear 436 is attached to the concave mirror 428 via a shaft 438 that extends in the left-right direction.

When the motor 431 rotates the circular gear 432 around the shaft 434 based on the control signal, the rotational motion is transmitted to the fan-shaped gear 436, and the fan-shaped gear 436 rotates around the shaft 438. Accordingly, a direction of the concave mirror 428 is swung around the shaft 438 that extends in a left-right direction.

The image generation unit 424 is provided with a heat sensor 440 for detecting a heat distribution on a light emission surface (for example, a liquid crystal surface) 424A of the image generation unit 424. The heat sensor 440 is, for example, a non-contact sensor. The heat distribution on the light emission surface 424A is detected by the heat sensor 440, so that it is possible to detect a temperature rise of the light emission surface 424A due to external light (sunlight) or the like described later. The heat sensor 440 can transmit a detection signal indicating the heat distribution of the light emission surface 424A to the HUD controller 425.

Next, operations of the HUD main body portion 420 according to the present embodiment will be described.

First, the heat sensor 440 detects the heat distribution of the light emission surface 424A of the image generation unit 424, and transmits the detection signal to the HUD controller 425. Based on the detection signal received from the heat sensor 440, the HUD controller 425 determines, for example, whether a temperature rise of at least a part of the light emission surface 424A is equal to or larger than a predetermined value. When it is determined that the temperature rise of the light emission surface 424A is equal to or larger than the predetermined value, the HUD controller 425 generates a control signal (hereinafter, referred to as a first control signal) for causing the drive unit 430 to swing the concave mirror 428 and a control signal (hereinafter, referred to as a second control signal) for changing an emission position of light emitted from the image generation unit 424, transmits the first control signal to the motor 431 of the drive unit 430, and transmits the second control signal to the image generation unit 424. That is, the swing of the concave mirror 428 and the change in an image generation position of the image generation unit 424 are performed in synchronization.

The motor 431 of the drive unit 430 rotates the circular gear 432 around the shaft 434 based on the first control signal received from the HUD controller 425. When the fan-shaped gear 436 is rotated around the shaft 438 based on the rotation of the circular gear 432, the direction of the concave mirror 428 is swung. That is, the drive unit 430 moves (swings) the direction of the concave mirror 428, for example, from a position P21 that is an initial position to a position P22 along a direction D shown in Fig. 24. Accordingly, as shown in Fig. 23, it is possible to make a position on the light emission surface 424A where external light L21 reflected by the concave mirror 428 before the concave mirror 428 is swung is focused different from a position on the light emission surface 424A where external light L22 reflected by the concave mirror 428 after the concave mirror 428 is swung is focused. It is preferable that the concave mirror 428 is swung such that an irradiation region of the external light L21 irradiating the light emission surface 424A of the image generation unit 424 before the direction of the concave mirror 428 is changed and an irradiation region of the external light L22 irradiating the light emission surface 424A after the direction of the concave mirror 428 is changed do not overlap each other. That is, regarding a range in which the external light is focused on the light emission surface 424A, it is preferable to change the direction of the concave mirror 428 such that the light-focusing ranges do not overlap before and after the swing of the concave mirror 428, and desirably, the light-focusing ranges are separated by a certain distance.

On the other hand, the image generation unit 424 changes an emission position of light based on the second control signal received from the HUD controller 425. That is, the image generation unit 424 changes a position of emitted light on the light emission surface 424A, for example, from a position G1 that is an initial position to a position G2 slightly lower than the position G1 (see Fig. 24). The position G2 of the emitted light after the change is a position corresponding to the position P22 after the swing of the concave mirror 428. That is, the HUD controller 425 changes the position of the emitted light of the image generation unit 424 such that an image formation position on the windshield 18 becomes a desired position before and after the swing of the concave mirror 428. Accordingly, the virtual image object I outside the vehicle, which can be visually recognized by the occupant, is formed at a desired position even before and after the swing of the concave mirror 428.

Since distortion of an image irradiating the windshield 18 changes before and after the swing of the concave mirror 428, the HUD controller 425 preferably controls the image generation unit 424 to change a degree of distortion of the image irradiating the windshield 18 according to the swing of the concave mirror 428.

Incidentally, as described above, the emission window 423 is a transparent plate that causes visible light to pass through. Therefore, as shown in Fig. 23, when the external light L21 such as the sunlight incident from an outside of the vehicle is incident on an inside of the HUD main body portion 420 from the emission window 423, the external light L21 may irradiate the light emission surface 424A of the image generation unit 424 in a state of being reflected and focused by the concave mirror 428. When the external light L21 focused like that irradiates the light emission surface 424A, an excessive temperature rise in the light emission surface 424A may occur, and the image generation unit 424 may deteriorate.

Therefore, as described above, the HUD 42 according to the present embodiment includes the image generation unit 424 that emits light for generating a predetermined image, the concave mirror 428 (an example of the reflection portion) that reflects emitted light such that the light emitted by the image generation unit 424 irradiates the windshield 18, the drive unit 430 for swinging the direction of the concave mirror 428, and the HUD controller 425 that controls operations of the image generation unit 424. According to this configuration, even when the external light such as the sunlight incident from the outside of the vehicle is reflected by the concave mirror 428 and irradiates the light emission surface 424A of the image generation unit 424, since the direction of the concave mirror 428 is swung by the drive unit 430, a position where the external light irradiates the light emission surface 424A of the image generation unit 424 can be changed. Accordingly, it is possible to prevent the external light from keeping irradiating the image generation unit 424 locally, to prevent an excessive temperature rise in the image generation unit 424, and to prevent deterioration of the image generation unit 424 due to heat.

In the HUD 42 according to the present embodiment, the HUD controller 425 is configured to change an emission position of light of the image generation unit 424 according to the swing of the direction of the concave mirror 428 by the drive unit 430. Accordingly, even when the direction of the concave mirror 428 is swung, since the emission position of the light of the image generation unit 424 is changed according to the swing, the image formation position on the windshield 18 is controlled to be a desired position, and the occupant of the vehicle is prevented from feeling uncomfortable. In this way, according to the configuration of the present embodiment, it is possible to prevent occurrence of heat damage due to the external light without reducing quality of generation of the virtual image object I to be displayed to the occupant.

Particularly, according to the configuration of the present embodiment, even when the external light irradiates the image generation unit 424 in a state of being reflected and focused by the concave mirror 428, deterioration of the image generation unit 424 due to heat can be prevented. The direction of the concave mirror 428 is changed such that the emission region of the external light L21 on the light emission surface 424A before the swing of the concave mirror 428 and the emission region of the external light L22 on the light emission surface 424A after the swing of the concave mirror 428 do not overlap, so that it is possible to reliably prevent a local temperature rise on the light emission surface 424A.

The HUD 42 according to the present embodiment includes the heat sensor 440 that can detect a temperature rise of the image generation unit 424. The drive unit 430 is configured to swing the direction of the concave mirror 428 in response to the detection of the temperature rise by the heat sensor 440. Accordingly, the direction of the concave mirror 428 is swung when the external light irradiates the image generation unit 424 and a temperature rises. That is, it is possible to prevent the drive unit 430 from performing an unnecessary operation and to extend a life of the drive unit 430. Further, energy consumption of the drive unit 430 can be reduced.

Also in a case of the HUD 142 including the combiner 143 as shown in Fig. 8, by controlling the image generation unit 424 to change an emission position of light of the image generation unit 424 according to a swing of a direction of the concave mirror 428 by the drive unit 430 (not shown in Fig. 8), it is possible to prevent occurrence of heat damage due to external light without reducing quality of generation of the virtual image object I.

In the HUD 42 according to the sixth embodiment, in order to prevent a local temperature rise when the external light is focused on the light emission surface 424A of the image generation unit 424, the configuration in which the concave mirror 428 is swung by the drive unit 430 is adopted, but the present invention is not limited to this example.

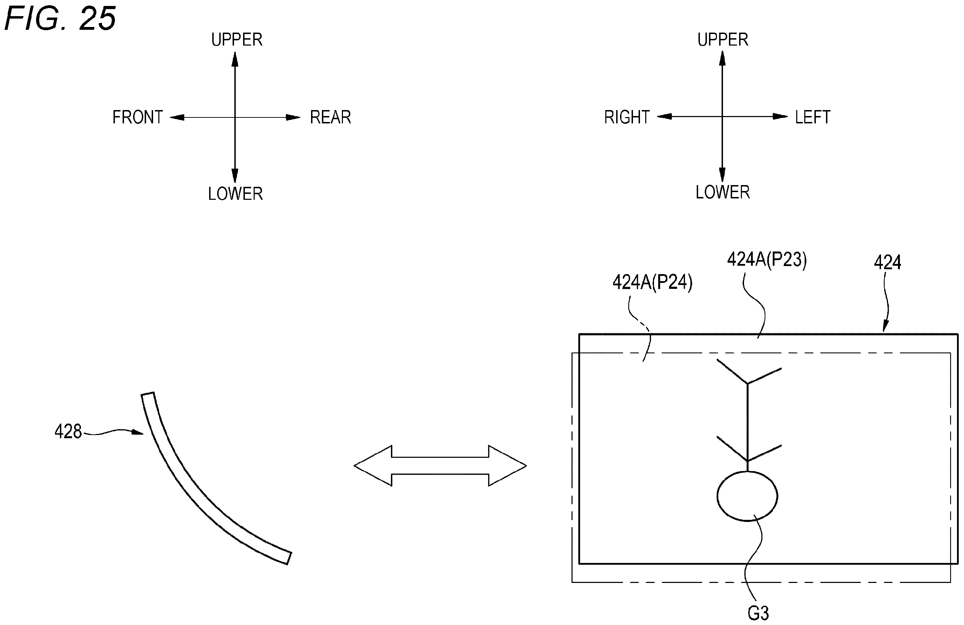

Fig. 25 is a schematic diagram for illustrating a relationship between a movement of the image generation unit 424 and an emission position of light emitted from the image generation unit 424 according to a modified example of the sixth embodiment. As shown in Fig. 25, instead of swinging the concave mirror 428, the image generation unit 424 itself may be moved by a drive unit (not shown). In this case, the direction of the concave mirror 428 is not variable but fixed. In this example, as the image generation unit 424 is moved from a position P23 that is an initial position to a position P24 below the position P23, a position of emitted light on the light emission surface 424A is changed. That is, a relative position of the emitted light with respect to the light emission surface 424A is changed such that the position of the emitted light is fixed to a position (an absolute position) G3 shown in Fig. 25 before and after the movement of the image generation unit 424. In this way, by changing the position (the relative position) of the emitted light on the light emission surface 424A such that an image formation position on the windshield 18 becomes a desired position before and after the movement of the image generation unit 424, the virtual image object I outside the vehicle, which can be visually recognized by the occupant, can be formed at a desired position even before and after the movement of the image generation unit 424, similar to the above-described embodiment.

Although illustration is omitted, a configuration in which the lens 426 or the screen 427 (an example of an optical member) is swung may be adopted instead of the configuration in which the image generation unit 424 or the concave mirror 428 is swung.

The HUD 42 according to the above-described sixth embodiment is configured to swing the direction of the concave mirror 428 in response to the detection of the temperature rise by the heat sensor 440 provided in the image generation unit 424, but the present invention is not limited to this example. The HUD may include an optical sensor that can detect external light incident on the concave mirror 428 instead of the heat sensor 440. In this case, the optical sensor preferably can detect, for example, a direction of the external light incident on the concave mirror 428. Specifically, for example, the external light incident at a specific angle can be detected by providing a directional photosensor as the optical sensor in a vicinity of the emission window 423. Also in this case, the drive unit 430 can swing the direction of the concave mirror 428 in response to the detection of the external light by the optical sensor. Accordingly, similar to a case where the heat sensor 440 is provided, it is possible to prevent the drive unit 430 from performing an unnecessary operation, lengthen the life of the drive unit 430, and reduce energy consumption.

In the above-described sixth embodiment, the configuration in which the direction of the concave mirror 428 is swung around the shaft 438 that extends along the left-right direction, that is, the configuration in which the concave mirror 428 is swung by one shaft by the drive unit 430 is adopted, but the present invention is not limited thereto. For example, a configuration may be adopted in which the direction of the concave mirror 428 is swung by two shafts in the upper-lower direction and the left-right direction. In this case, for example, it is preferable to separately provide a drive unit that swings the direction of the concave mirror 428 around a shaft that extends in the upper-lower direction. Accordingly, the swing of the concave mirror 428 can be controlled more precisely. A reflection portion (a planar mirror or the like) different from the concave mirror 428 may be provided between the screen 427 and the concave mirror 428 on an optical path of the emitted light from the image generation unit 424, the direction of the concave mirror 428 may be swung, and a direction of such another reflection portion may also be swung.

A material that reflects visible light and causes infrared light to pass through is used as the concave mirror or another reflection portion (the planar mirror or the like), so that it is possible to further prevent occurrence of heat damage to the image generation unit due to the external light.

Although the embodiment of the present invention has been described above, it is needless to say that the technical scope of the present invention should not be limitedly interpreted by the description of the embodiments. The present embodiments are merely given as an example, and a person skilled in the art would understand that various modifications can be made to the embodiments within the scope of the invention described in the claims. The technical scope of the present invention should be determined based on the scope of the invention described in the claims.

In the above embodiments, the driving mode of the vehicle has been described as including the fully autonomous driving mode, the advanced driving support mode, the driving support mode, and the manual driving mode, but the driving mode of the vehicle should not be limited to these four modes. The driving mode of the vehicle may include at least one of these four modes. For example, only one of the driving modes of the vehicle may be executable.

Classification and a display form of the driving mode of the vehicle may be appropriately changed according to laws and regulations related to autonomous driving in each country. Similarly, definitions of the "fully autonomous driving mode", the "advanced driving support mode", and the "driving support mode" described in the description of the present embodiments are merely examples, and the definitions may be appropriately changed according to the laws and the regulations related to the autonomous driving in each country.

## Claims

1. A head-up display (42) provided in a vehicle (1) and configured to display a predetermined image toward an occupant of the vehicle (1), the head-up display (42) comprising:
an image generation unit (420) configured to emit light for generating the predetermined image and to irradiate a windshield (18) or a combiner (143); and
a controller (425) configured to control an operation of the image generation unit (420),
wherein the controller (425) controls the image generation unit (420) to select one of a planar image and a stereoscopic image as a display mode of a virtual image object formed by the predetermined image and visually recognized by the occupant through the windshield (18) or the combiner (143), according to a predetermined condition, **characterized in that**
the predetermined condition includes a distance from the occupant to the virtual image object.

2. The head-up display (42) according to claim 1,
wherein the predetermined condition further includes at least one of an attribute of a target object in the real space, an area where the virtual image object is disposed in a field-of-view region (V) of the occupant, and a traveling scene of the vehicle (1).

3. The head-up display (42) according to claim 1,
wherein controller (425) controls the image generation unit (420) such that the display mode is set as the stereoscopic image when the distance is equal to or smaller than a threshold, and the display mode is set as the planar image when the distance is larger than the threshold.

4. The head-up display (42) according to claim 2,
wherein when the predetermined condition further includes the attribute of the target object, the controller (425) controls the image generation unit (420) such that the display mode of the virtual image object is set as the stereoscopic image for the target object having high importance, and the display mode of the virtual image object is set as the planar image for the target object having low importance.

5. The head-up display (42) according to claim 2,
wherein in a case where the predetermined condition further includes the area where the virtual image object is disposed in the field-of-view region (V) of the occupant, the controller (425) controls the image generation unit (420) such that the display mode is set as the stereoscopic image when the virtual image object is positioned in a central area of the field-of-view region (V), and the display mode is set as the planar image when the virtual image object is positioned in an area other than the central area.

6. The head-up display (42) according to claim 2,
wherein in a case where the predetermined conditior further includes the traveling scene of the vehicle (1), the controller controls the image generation unit (420) such that the display mode is set as the stereoscopic image when the vehicle (1) travels on a general road, and the display mode is set as the planar image when the vehicle (1) travels on an expressway.

## Patentansprüche

1. Head-up-Display (42), das in einem Fahrzeug (1) bereitgestellt und konfiguriert ist zum Anzeigen eines vorbestimmten Bildes in Richtung eines Insassen des Fahrzeugs (1), wobei das Head-up-Display (42) umfasst:
eine Bilderzeugungseinheit (420), die konfiguriert ist zum Emittieren von Licht zur Erzeugung des vorbestimmten Bildes und zum Bestrahlen einer Windschutzscheibe (18) oder eines Combiners (143); und
eine Steuerung (425), die konfiguriert ist zum Steuern eines Betriebes der Bilderzeugungseinheit (420),
wobei die Steuerung (425) die Bilderzeugungseinheit (420) steuert, um entweder ein planares Bild oder ein stereoskopisches Bild als einen Anzeigemodus eines virtuellen Bildobjekts auszuwählen, das durch das vorbestimmte Bild gebildet wird und visuell durch den Insassen durch die Windschutzscheibe (18) oder den Combiner (143) erkannt wird, nach einer vorbestimmten Bedingung, **dadurch gekennzeichnet, dass**
die vorbestimmte Bedingung einen Abstand von dem Insassen zu dem virtuellen Bildobjekt aufweist.

2. Head-up-Display (42) nach Anspruch 1,
wobei die vorbestimmte Bedingung weiter mindestens eines von einem Attribut eines Zielobjekts in dem realen Raum, einem Bereich, in dem das virtuelle Bildobjekt in einem Sichtfeldbereich (V) des Insassen angeordnet ist, und einer Fahrszene des Fahrzeugs (1) einschließt.

3. Head-up-Display (42) nach Anspruch 1,
wobei die Steuerung (425) die Bilderzeugungseinheit (420) derart steuert, dass der Anzeigemodus als das stereoskopische Bild eingestellt wird, wenn der Abstand gleich oder kleiner als ein Schwellenwert ist, und der Anzeigemodus als das planare Bild eingestellt wird, wenn der Abstand größer als der Schwellenwert ist.

4. Head-up-Display (42) nach Anspruch 2,
wobei, wenn die vorbestimmte Bedingung weiter das Attribut des Zielobjekts einschließt, die Steuerung (425) die Bilderzeugungseinheit (420) so steuert, dass der Anzeigemodus des virtuellen Bildobjekts als das stereoskopische Bild für das Zielobjekt mit hoher Wichtigkeit eingestellt wird, und der Anzeigemodus des virtuellen Bildobjekts als das planare Bild für das Zielobjekt mit niedriger Wichtigkeit eingestellt wird.

5. Head-up-Display (42) nach Anspruch 2,
wobei in einem Fall, in dem die vorbestimmte Bedingung weiter den Bereich einschließt, in dem das virtuelle Bildobjekt in dem Sichtfeldbereich (V) des Insassen angeordnet ist, die Steuerung (425) die Bilderzeugungseinheit (420) derart steuert, dass der Anzeigemodus als das stereoskopische Bild eingestellt wird, wenn das virtuelle Bildobjekt in einem zentralen Bereich des Sichtfeldbereichs (V) positioniert ist, und der Anzeigemodus als das planare Bild eingestellt wird, wenn das virtuelle Bildobjekt in einem anderen Bereich als dem zentralen Bereich positioniert ist.

6. Head-up-Display (42) nach Anspruch 2,
wobei in einem Fall, in dem die vorbestimmte Bedingung weiter die Fahrszene des Fahrzeugs (1) einschließt, die Steuerung die Bilderzeugungseinheit (420) derart steuert, dass der Anzeigemodus als das stereoskopische Bild eingestellt wird, wenn das Fahrzeug (1) auf einer allgemeinen Straße fährt, und der Anzeigemodus als das planare Bild eingestellt wird, wenn das Fahrzeug (1) auf einer Schnellstraße fährt.

## Revendications

1. Affichage tête haute (42) disposé dans un véhicule (1) et configuré pour afficher une image prédéterminée en face d'un occupant du véhicule (1), l'affichage tête haute (42) comprenant :
une unité de génération d'image (420) configurée pour émettre de la lumière afin de générer l'image prédéterminée et d'éclairer un pare-brise (18) ou un combineur (143) ; et
un dispositif de commande (425) configuré pour commander un fonctionnement de l'unité de génération d'image (420),
dans lequel le dispositif de commande (425) commande l'unité de génération d'image (420) pour qu'elle sélectionne une d'une image plane et d'une image stéréoscopique en tant que mode d'affichage d'un objet d'image virtuelle formé par l'image prédéterminée et reconnu visuellement par l'occupant à travers le pare-brise (18) ou le combineur (143), selon une condition prédéterminée, **caractérisé en ce que**
la condition prédéterminée inclut une distance de l'occupant à l'objet d'image virtuelle.

2. Affichage tête haute (42) selon la revendication 1,
dans lequel la condition prédéterminée inclut en outre au moins un d'un attribut d'un objet cible dans l'espace réel, d'une zone dans laquelle l'objet d'image virtuelle est disposé dans une région de champ de vision (V) de l'occupant, et d'un lieu de circulation du véhicule (1).

3. Affichage tête haute (42) selon la revendication 1,
dans lequel l'unité de commande (425) commande l'unité de génération d'image (420) de sorte que le mode d'affichage est défini comme l'image stéréoscopique lorsque la distance est inférieure ou égale à un seuil, et le mode d'affichage est défini comme l'image plane lorsque la distance est supérieure au seuil.

4. Affichage tête haute (42) selon la revendication 2,
dans lequel lorsque la condition prédéterminée inclut en outre l'attribut de l'objet cible, l'unité de commande (425) commande l'unité de génération d'image (420) de sorte que le mode d'affichage de l'objet d'image virtuelle est défini comme l'image stéréoscopique pour l'objet cible ayant une importance haute, et le mode d'affichage de l'objet d'image virtuelle est défini comme l'image plane pour l'objet cible avant une importance faible.

5. Affichage tête haute (42) selon la revendication 2,
dans lequel dans un cas où la condition prédéterminée inclut en outre la zone dans laquelle l'objet d'image virtuelle est disposé dans la région de champ de vision (V) de l'occupant, le dispositif de commande (425) commande l'unité de génération d'image (420) de sorte que le mode d'affichage est défini comme l'image stéréoscopique lorsque l'objet d'image virtuelle est positionné dans une zone centrale de la région du champ de vision (V), et le mode d'affichage est défini comme l'image plane lorsque l'objet d'image virtuelle est positionné dans une zone autre que la zone centrale.

6. Affichage tête haute (42) selon la revendication 2,
dans lequel dans un cas où la condition prédéterminée inclut en outre le lieu de circulation du véhicule (1), le dispositif de commande commande l'unité de génération d'image (420) de sorte que le mode d'affichage est défini comme l'image stéréoscopique lorsque le véhicule (1) circule sur une route générale, et le mode d'affichage est défini comme l'image plane lorsque le véhicule (1) circule sur une voie rapide.
